(19) **Europäisches Patentamt European Patent Office Office européen des brevets**

(11) **EP 4 637 206 A1**

(12) **EUROPEAN PATENT APPLICATION**
published in accordance with Art. 153(4) EPC

(43) Date of publication:
**22.10.2025 Bulletin 2025/43**

(21) Application number: **24755891.9**

(22) Date of filing: **18.01.2024**

(51) International Patent Classification (IPC):
**H04W 24/10** (2009.01)

(52) Cooperative Patent Classification (CPC):
**H04B 7/06; H04B 17/318; H04B 17/336; H04W 24/10**

(86) International application number:
**PCT/CN2024/073091**

(87) International publication number:
**WO 2024/169516 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023 CN 202310165301**

(71) Applicant: **Huawei Technologies Co., Ltd.**
**Shenzhen, Guangdong 518129 (CN)**

(72) Inventors:
- **HA, Yinaer**
  **Shenzhen, Guangdong 518129 (CN)**
- **GENG, Tingting**
  **Shenzhen, Guangdong 518129 (CN)**
- **ZENG, Yu**
  **Shenzhen, Guangdong 518129 (CN)**
- **CHEN, Jun**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57) A communication method and apparatus are provided, to quickly identify that inference performance of an artificial intelligence (artificial intelligence, AI) model in a communication network deteriorates. In this application, the communication method includes: A terminal device receives monitoring configuration information of a first AI model from an access network device. The monitoring configuration information is used to monitor inference performance of the first AI model. The terminal device determines a trigger event based on the monitoring configuration information. Further, the terminal device monitors the first AI model, and sends a monitoring report to the access network device when determining that the trigger event occurs. The monitoring report indicates the inference performance of the first AI model.

FIG. 9

EP 4 637 206 A1

**Description**

CROSS-REFERENCE TO RELATED APPLICATIONS

This application claims priority to Chinese Patent Application No. 202310165301.9, filed with the China National Intellectual Property Administration on February 16, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

Artificial intelligence (artificial intelligence, AI) is a technology that performs complex computing by simulating a human brain. With improvement of data storage and computing capabilities, artificial intelligence is increasingly applied. The 3rd generation partnership project (3rd generation partnership project, 3GPP) proposes to apply artificial intelligence to a 5th generation (5th generation, 5G) communication system, to improve network performance and user experience through intelligent collection and data analysis.

An AI model is usually deployed in a terminal device. The terminal device performs inference based on the AI model. For example, in a channel state information (channel state information, CSI) prediction scenario, the terminal device may measure reference signals at a plurality of moments, to obtain channel state information at the plurality of moments, and then infer channel state information at a future moment based on the channel state information at the plurality of moments and the AI model. In this way, the terminal device can perform better data transmission with a network device based on the predicted channel state information.

However, inference performance of the AI model may deteriorate due to impact of a radio/non-radio environment factor. How to quickly identify that the inference performance of the AI model deteriorates is a technical problem that needs to be urgently resolved currently.

SUMMARY

This application provides a communication method and apparatus, to monitor/monitor performance of an AI model in a communication network, thereby quickly identifying that inference performance of the AI model deteriorates.

According to a first aspect, this application provides a communication method. The communication method may be performed by a terminal device or a module (for example, a chip) in the terminal device. The following provides descriptions by using an example in which the method is performed by the terminal device.

The communication method includes: The terminal device receives monitoring configuration information of a first AI model from an access network device. The monitoring configuration information is used to monitor inference performance of the first AI model. The terminal device determines a trigger event based on the monitoring configuration information. Further, the terminal device monitors the first AI model, and sends a monitoring report to the access network device when determining that the trigger event occurs. The monitoring report indicates the inference performance of the first AI model. In other words, the trigger event is used to trigger the terminal device to send the monitoring report to the access network device.

In the foregoing technical solution, the terminal device monitors the inference performance of the first AI model based on the monitoring configuration information, and sends, to the access network device when determining that the trigger event occurs, the monitoring report indicating the inference performance of the first AI model. In this way, the terminal device can find in a timely manner that the inference performance of the first AI model deteriorates, and take a corresponding measure for the first AI model, to ensure overall network performance.

In a possible implementation, the trigger event includes a performance indicator and a trigger condition corresponding to the performance indicator, and when the terminal device determines that the trigger event occurs, details may be as follows: The terminal device determines a value of the performance indicator of the first AI model; and further, the terminal device determines that the value of the performance indicator of the first AI model meets the trigger condition. In the foregoing technical solution, the terminal device monitors the value of the performance indicator of the first AI model in the trigger event. Once the terminal device determines that the value of the performance indicator meets the trigger condition, the terminal device determines that the trigger event occurs. In this way, it can be found, in a timely manner based on the value of the performance indicator, that the inference performance of the first AI model deteriorates, and a corresponding measure is taken for the first AI model, to ensure overall network performance.

In a possible implementation, the first AI model is deployed in the terminal device. When the terminal device determines the value of the performance indicator of the first AI model, details may be as follows: The terminal device measures a reference signal at a target moment, to obtain first channel state information. The terminal device predicts second channel state information at the target moment based on the first AI model and channel state information obtained by measuring the reference signal at a historical moment. The historical moment is before the target moment. Then, the terminal device determines the value of the performance indicator of the first AI model based on the first channel state information and the second channel state information. The reference signal may be specifically a channel state information reference signal (channel state information reference signal, CSI-RS). In a possible implementation, the performance indicator is a squared generalized cosine similarity (squared generalized cosine similarity, SGCS), and a preset condition of the performance indicator is that a value of the SGCS is less than an SGCS threshold, or a preset condition of the performance indicator is that a value of the SGCS is less than an SGCS threshold and duration reaches preset duration. The foregoing technical solution provides an implementation in which the terminal device determines the value of the performance indicator of the first AI model in a channel state information prediction scenario. In this way, the terminal device can monitor performance of the first AI model in the channel state information prediction scenario based on the value of the performance indicator of the first AI model.

In a possible implementation, the first AI model includes a first AI submodel and a second AI submodel, the first AI submodel is deployed in the terminal device, and the second AI submodel is deployed in the access network device. When the terminal device determines the value of the performance indicator of the first AI model, details may be as follows: The terminal device measures a reference signal, to obtain first channel state information. The terminal device compresses the first channel state information based on the first AI submodel, to obtain a compression result, and then sends the compression result to the access network device. Correspondingly, the access network device receives the compression result from the terminal device, decompresses the compression result based on the second AI submodel, to obtain second channel state information, and sends the second channel state information to the terminal device. Then, the terminal device determines the value of the performance indicator of the first AI model based on the first channel state information and the second channel state information. The reference signal may be specifically a CSI-RS. In a possible implementation, the performance indicator is an SGCS, and a preset condition of the performance indicator is that a value of the SGCS is less than an SGCS threshold, or a preset condition of the performance indicator is that a value of the SGCS is less than an SGCS threshold and duration reaches preset duration. The foregoing technical solution provides an implementation in which the terminal device determines the value of the performance indicator of the first AI model in a channel state information compression scenario. In this way, the terminal device can monitor performance of the first AI model in the channel state information compression scenario based on the value of the performance indicator of the first AI model.

In a possible implementation, the monitoring configuration information includes a plurality of trigger condition templates, and the monitoring configuration information further includes the performance indicator, a threshold, and a template identifier that correspond to the trigger event. When the terminal device determines the trigger event based on the monitoring configuration information, details may be as follows: The terminal device determines a target trigger condition template from the plurality of trigger condition templates based on the template identifier; and the terminal device determines the trigger event based on the target trigger condition template, and the performance indicator and the threshold that correspond to the trigger event. The trigger condition includes that the value of the performance indicator is greater than the threshold, or the value of the performance indicator is less than the threshold, or a difference between two values of the performance indicator is greater than the threshold, or a difference between two values of the performance indicator is less than the threshold.

It may also be understood that each of the plurality of trigger condition templates indicates the trigger condition. Correspondingly, when the terminal device determines whether a specific trigger event occurs, details may be as follows: The terminal device determines a target trigger condition template corresponding to the trigger event from the plurality of trigger condition templates based on a template identifier corresponding to the trigger event, and then determines, based on the target trigger condition template and a performance indicator and a threshold that correspond to the trigger event, whether a value of a performance indicator that is of the first AI model and that corresponds to the trigger event meets a trigger condition corresponding to the performance indicator, to determine whether the trigger event occurs. In the foregoing technical solution, the monitoring configuration information includes the plurality of trigger condition templates, and a performance indicator, a threshold, and a template identifier that correspond to each of a plurality of trigger events. In this way, the terminal device may determine the plurality of trigger events, so that not only the plurality of trigger events can be flexibly configured, but also signaling overheads of sending the monitoring configuration information can be reduced.

In a possible implementation, the monitoring report includes the trigger event, and the trigger event is used by the access network device to determine a change indication. The method further includes: The terminal device receives the change indication from the access network device; and the terminal device changes the first AI model based on the change indication. In the foregoing technical solution, the access network device decides how to change the first AI model, so that the access network device can obtain a running state and a state change of the AI model on a terminal device side in a timely manner, to better optimize network performance.

In a possible implementation, the monitoring report includes a result of changing the first AI model; and before the terminal device sends the monitoring report to the access network device, the terminal device further changes the first AI model based on the trigger event, to obtain the result of changing the first AI model. In the foregoing technical solution, the terminal device decides how to change the first AI model, and sends a decision result to the access network device, so that the access network device can sense the running state and the state change of the AI model on the terminal device side in a timely manner, to better optimize network performance.

In a possible implementation, that the terminal device changes the first AI model includes one or more of the following: The terminal device switches the first AI model to a second AI model. The terminal device updates a parameter and/or structure in the first AI model. The terminal device deactivates the first AI model. The terminal device makes a communication network fall back from an AI mode to a non-AI mode. In this way, the terminal device may change the first AI model in a plurality of manners, to help better optimize network performance.

According to a second aspect, this application provides a communication method. The communication method may be performed by an access network device or a module (for example, a chip) in the access network device. The following provides descriptions by using an example in which the method is performed by the access network device.

The communication method includes: The access network device sends monitoring configuration information of a first AI model to a terminal device. The monitoring configuration information is used to monitor inference performance of the first AI model, and the monitoring configuration information indicates a trigger event. The access network device receives a monitoring report from the terminal device. The monitoring report indicates inference performance that is of the first AI model and that exists when the trigger event occurs.

In a possible implementation, the trigger event includes a performance indicator and a trigger condition corresponding to the performance indicator, and that the trigger event occurs includes that a value of the performance indicator of the first AI model meets the trigger condition.

In a possible implementation, the monitoring configuration information includes a plurality of trigger condition templates, and the monitoring configuration information further includes the performance indicator, a threshold, and a template identifier that correspond to the trigger event. The template identifier indicates a target trigger condition template in the plurality of trigger condition templates. The target trigger condition template, and the performance indicator and the threshold that correspond to the trigger event are used to determine the trigger event. Alternatively, it is considered that the target trigger condition template, and a performance indicator and a threshold that correspond to the trigger event are used to determine whether the trigger event occurs, that is, determine whether the value of the performance indicator that is of the first AI model and that corresponds to the trigger event meets the trigger condition corresponding to the performance indicator. The trigger condition includes that the value of the performance indicator is greater than the threshold, or the value of the performance indicator is less than the threshold, or a difference between two values of the performance indicator is greater than the threshold, or a difference between two values of the performance indicator is less than the threshold.

In a possible implementation, the monitoring report includes the trigger event, and the method further includes: The access network device sends a change indication to the terminal device based on the trigger event. The change indication is used to change the first AI model.

In a possible implementation, the monitoring report includes a result of changing the first AI model.

In a possible implementation, changing the first AI model includes one or more of the following: switching the first AI model to a second AI model; updating a parameter and/or structure in the first AI model; deactivating the first AI model; and making a communication network fall back from an AI mode to a non-AI mode.

According to a third aspect, an embodiment of this application provides a communication apparatus. The apparatus has a function of implementing the terminal device in any one of the first aspect or the possible implementations of the first aspect. The apparatus may be a terminal device, or may be a chip included in the terminal device. The apparatus may also have a function of implementing the access network device in any one of the second aspect or the possible implementations of the second aspect. The apparatus may be an access network device, or may be a chip included in the access network device.

A function of the communication apparatus may be implemented by hardware, or may be implemented by hardware executing corresponding software. The hardware or the software includes one or more modules, units, or means (means) corresponding to the function.

In a possible design, a structure of the apparatus includes a processing module and a transceiver module. The processing module is configured to support the apparatus to perform the method in any one of the first aspect or the possible implementations of the first aspect; or perform the method in any one of the second aspect or the possible implementations of the second aspect. The transceiver module is configured to support communication between the apparatus and another communication device. For example, when the apparatus is a terminal device, the apparatus may receive monitoring configuration information of a first AI model from an access network device. The communication apparatus may further include a storage module. The storage module is coupled to the processing module, and stores program instructions and data that are necessary for the apparatus. In an example, the processing module may be a processor, the communication module may be a transceiver, the storage module may be a memory, and the memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, so that the apparatus is enabled to perform the method in any one of the first aspect or the possible implementations of the first aspect, or perform the method in any one of the second aspect or the possible implementations of the second aspect. Optionally, the apparatus further includes a communication interface, and the processor is coupled to the communication interface.

According to a fourth aspect, an embodiment of this application provides a chip system, including a processor. The processor is coupled to a memory, the memory is configured to store a program or instructions, and when the program or the instructions are executed by the processor, the chip system is enabled to implement the method in any one of the first aspect or the possible implementations of the first aspect, or implement the method in any one of the second aspect or the possible implementations of the second aspect.

Optionally, the chip system further includes an interface circuit, and the interface circuit is configured to exchange code instructions with the processor.

Optionally, there may be one or more processors in the chip system, and the processor may be implemented by hardware or software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be separately disposed on different chips.

According to a fifth aspect, an embodiment of this application provides a computer-readable storage medium. The computer-readable storage medium stores computer programs or instructions, and when the computer programs or the instructions are executed, a computer is enabled to perform the method in any one of the first aspect or the possible implementations of the first aspect, or perform the method in any one of the second aspect or the possible implementations of the second aspect.

According to a sixth aspect, an embodiment of this application provides a computer program product. When a computer reads and executes the computer program product, the computer is enabled to perform the method in any one of the first aspect or the possible implementations of the first aspect, or perform the method in any one of the second aspect or the possible implementations of the second aspect.

For technical effects that can be achieved in any one of the second aspect to the sixth aspect, refer to descriptions of beneficial effects in the first aspect. Details are not described herein again.

BRIEF DESCRIPTION OF DRAWINGS

FIG. 1 is a diagram of a communication system according to this application;
FIG. 2 and FIG. 3 are diagrams of model deployment according to this application;
FIG. 4a and FIG. 4b are diagrams of architectures of a communication system according to this application;
FIG. 5 is a diagram of an application of an AI model according to this application;
FIG. 6 is a diagram of a model in a channel state information compression scenario according to this application;
FIG. 7 is a diagram of a model in a channel state information prediction scenario according to this application;
FIG. 8 is a schematic flowchart of lifecycle management of an AI model according to this application;
FIG. 9 is a schematic flowchart of a first communication method according to this application;
FIG. 10 is a diagram of an association relationship between a monitoring identifier, a model, and a monitoring report according to an example of this application;
FIG. 11 is a schematic flowchart of monitoring a first AI model in a channel state information compression scenario according to an example of this application;
FIG. 12 is a schematic flowchart of monitoring a first AI model in a channel state information prediction scenario according to an example of this application;
FIG. 13 is a diagram of a structure of a communication apparatus according to this application; and
FIG. 14 is a diagram of a structure of another communication apparatus according to this application.

## DESCRIPTION OF EMBODIMENTS

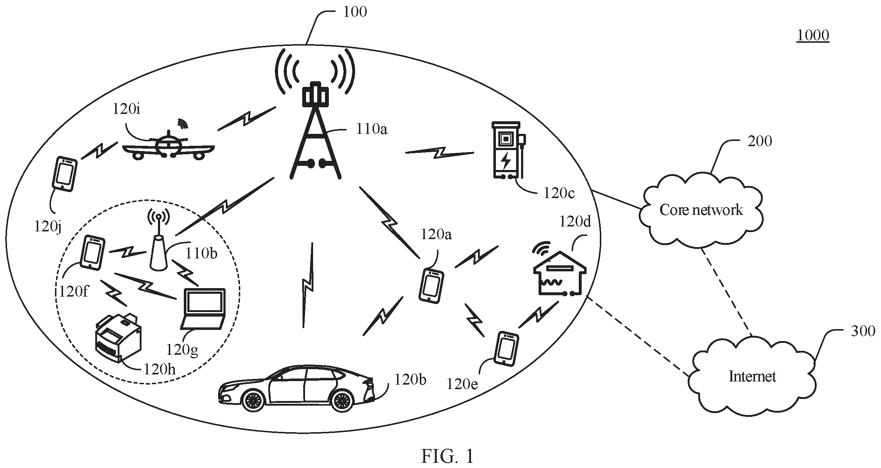

FIG. 1 is a diagram of an architecture of a communication system 1000 to which this application is applicable. As shown in FIG. 1, the communication system includes a radio access network 100 and a core network 200. Optionally, the communication system 1000 may further include an internet 300.

The radio access network 100 may include at least one access network device (for example, 110a and 110b in FIG. 1), and may further include at least one terminal device (for example, 120a to 120j in FIG. 1). The terminal device is connected to the access network device in a wireless manner, and the access network device is connected to the core network in a wireless or wired manner. A core network device and the access network device may be different physical devices that are independent of each other, functions of a core network device and logical functions of the access network device may be integrated into a same physical device, or a part of functions of a core network device and a part of functions of the access network device may be integrated into one physical device. Terminal devices may be connected to each other in a wired or wireless manner, and access network devices may be connected to each other in a wired or wireless manner. FIG. 1 is merely a diagram. The communication system may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes a part of functions of a base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in this application.

In this application, an apparatus configured to implement the functions of the access network device may be the access network device, or may be an apparatus that can support the access network device in implementing the functions, for example, a chip system, a hardware circuit, a software module, or a combination of a hardware circuit and a software module. The apparatus may be installed in the access network device, or may be matched with the access network device for use. In this application, the chip system may include a chip, or may include a chip and another discrete component.

Further, communication between the access network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical layer, PHY) layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer. Optionally, the protocol layer structure between the access network device and the terminal device may further include an artificial intelligence (artificial intelligence, AI) layer used for transmission of data related to an AI function.

An access device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. A specific name of each interface is not limited in this application. The CU and the DU may be divided based on protocol layers of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU. This is not limited.

Division into processing functions of the CU and the DU based on protocol layers is merely an example, and may be performed in another manner. For example, the CU or the DU may have more functions of protocol layers through division. For another example, the CU or the DU may have some processing functions of protocol layers through division. In a design, a part of functions of an RLC layer and a function of a protocol layer above the RLC layer are set on the CU, and a remaining function of the RLC layer and a function of a protocol layer below the RLC layer are set on the DU. In another design, functions of the CU or the DU may alternatively be divided based on service types or other system requirements. For example, division may be performed based on delays. Functions whose processing time needs to satisfy a delay requirement are set on the DU, and functions whose processing time does not need to satisfy the delay requirement are set on the CU. In another design, the CU may alternatively have one or more functions of the core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be divided at the physical layer. For example, the DU may implement higher-layer functions of the physical layer, and the RU may implement lower-layer functions of the physical layer. When sending is performed, functions of the physical layer may include at least one of the following: cyclic redundancy check (cyclic redundancy check, CRC) code addition, channel encoding, rate matching, scrambling, modulation, layer mapping, precoding, resource mapping, physical antenna mapping, or a radio frequency sending function. When receiving is performed, functions of the physical layer may include at least one of the following: CRC check, channel decoding, rate dematching, descrambling, demodulation, layer demapping, channel detection, resource demapping, physical antenna demapping, or a radio frequency receiving function. The higher-layer functions of the physical layer may include a part of functions of the physical layer. For example, the part of functions are closer to the MAC layer. The lower-layer functions of the physical layer may include another part of functions of the physical layer. For example, the part of functions are closer to the radio frequency function. For example, the higher-layer functions of the physical layer may include CRC code addition, channel encoding, rate matching, scrambling, modulation, and layer mapping, and the lower-layer functions of the physical layer may include precoding, resource mapping, physical antenna mapping, and the radio frequency sending function. Alternatively, the higher-layer functions of the physical layer may include CRC code addition, channel encoding, rate matching, scrambling, modulation, layer mapping, and precoding, and the lower-layer functions of the physical layer may include resource mapping, physical antenna mapping, and the radio frequency sending function. For example, the higher-layer functions of the physical layer may include CRC check, channel decoding, rate dematching, decoding, demodulation, and layer demapping, and the lower-layer functions of the physical layer may include channel detection, resource demapping, physical antenna demapping, and the radio frequency receiving function. Alternatively, the higher-layer functions of the physical layer may include CRC check, channel decoding, rate dematching, decoding, demodulation, layer demapping, and channel detection, and the lower-layer functions of the physical layer may include resource demapping, physical antenna demapping, and the radio frequency receiving function.

For example, functions of the CU may be implemented by one entity, or may be implemented by different entities. For example, functions of the CU may be further divided. That is, a control plane and a user plane are separated and implemented by using different entities, which are respectively a control plane CU entity (namely, a CU-CP entity) and a user plane CU entity (namely, a CU-UP entity). The CU-CP entity and the CU-UP entity may be connected through an E1 interface. The CU-CP entity and the CU-UP entity may be coupled to the DU, to jointly complete a function of the access network device. The control plane CU-CP of the CU further includes a further split architecture. That is, an existing CU-CP is further split into a CU-CP 1 and a CU-CP 2. The CU-CP 1 includes various radio resource management functions, and the CU-CP 2 includes only an RRC function and a PDCP-C function (that is, a basic function of control plane signaling at a PDCP layer).

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this application.

The terminal device may also be referred to as a terminal, user equipment (user equipment, UE), a mobile station, a mobile terminal device, or the like. The terminal device may be widely used in communication in various scenarios, for example, including but not limited to at least one of the following scenarios: device-to-device (device-to-device, D2D), vehicle-to-everything (vehicle-to-everything, V2X), machine-type communication (machine-type communication, MTC), an internet of things (internet of things, IoT), virtual reality, augmented reality, industrial control, self-driving, telemedicine, smart grid, smart furniture, smart office, smart wear, smart transportation, or smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific device form used by the terminal device are not limited in this application.

In this application, an apparatus configured to implement the functions of the terminal device may be the terminal device, or may be an apparatus that can support the terminal device in implementing the functions, for example, a chip system, a hardware circuit, a software module, or a combination of a hardware circuit and a software module. The apparatus may be installed in the terminal device, or may be matched with the terminal device for use.

The access network device and the terminal device may be located in fixed locations, or may be movable. The access network device and/or terminal device may be deployed on land, including indoors or outdoors, or in a handheld manner or a vehicle-mounted manner, may be deployed on water, or may be deployed on an airplane, a balloon, or a man-made satellite in the air. Application scenarios of the access network device and the terminal device are not limited in this application. The access network device and the terminal device may be deployed in a same scenario or different scenarios. For example, the access network device and the terminal device are both deployed on the land; or the access network device is deployed on the land, and the terminal device is deployed on the water. Examples are not provided one by one.

Roles of the access network device and the terminal device may be relative. For example, a helicopter or an uncrewed aerial vehicle 120i in FIG. 1 may be configured as a mobile access network device. For the terminal device 120j that accesses the radio access network 100 via 120i, the terminal device 120i is an access network device. However, for the access network device 110a, 120i is a terminal device, that is, 110a and 120i communicate with each other based on a radio air interface protocol. Alternatively, 110a and 120i communicate with each other based on an interface protocol between the access network devices. In this case, for 110a, 120i is also an access network device. Therefore, both the access network device and the terminal device may be collectively referred to as communication apparatuses. 110a and 110b in FIG. 1 may be referred to as communication apparatuses having a function of the access network device, and 120a to 120j in FIG. 1 may be referred to as communication apparatuses having a function of the terminal device.

In this application, an independent network element (for example, referred to as an AI network element or an AI node) may be introduced into the communication system shown in FIG. 1, to implement an AI-related operation. The AI network element may be directly connected to the access network device in the communication system, or may be indirectly connected to the access network device via a third-party network element. The third-party network element may be a network element in a core network such as an authentication management function (authentication management function, AMF) or a user plane function (user plane function, UPF). Alternatively, an AI module (which may also be referred to as an AI function or an AI entity) may be configured in another network element in the communication system, to implement an AI-related operation. For example, the another network element may be an access network device (for example, a gNB), a core network device, or operation, administration, and maintenance (operation, administration, and maintenance, OAM). In this case, a network element that performs an AI-related operation is a network element in which an AI module is built. The OAM is configured to perform operation, management, maintenance, and the like on the access network device and/or the core network device. For example, when the AI module is located in the OAM, a current northbound interface may be reused for communication between the AI module and the access network device; or when the AI module is located in the access network device, current interfaces such as F1, Xn, and Uu may be reused; or when the AI module is an independent network entity, a communication link from the network entity to the OAM and the access network device needs to be re-established. The communication link may be a wired link or a wireless link.

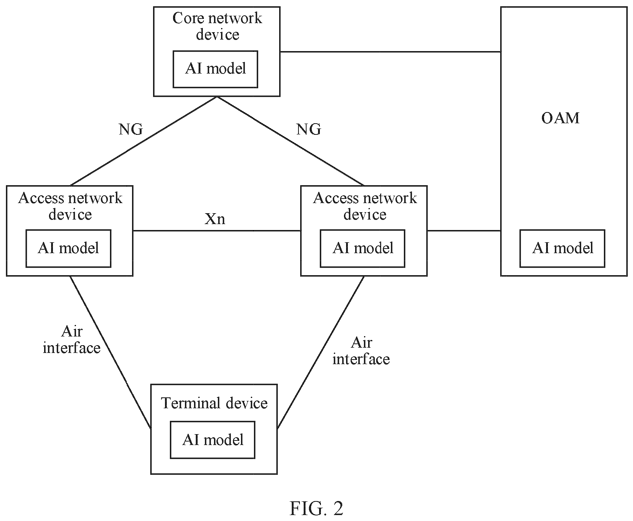

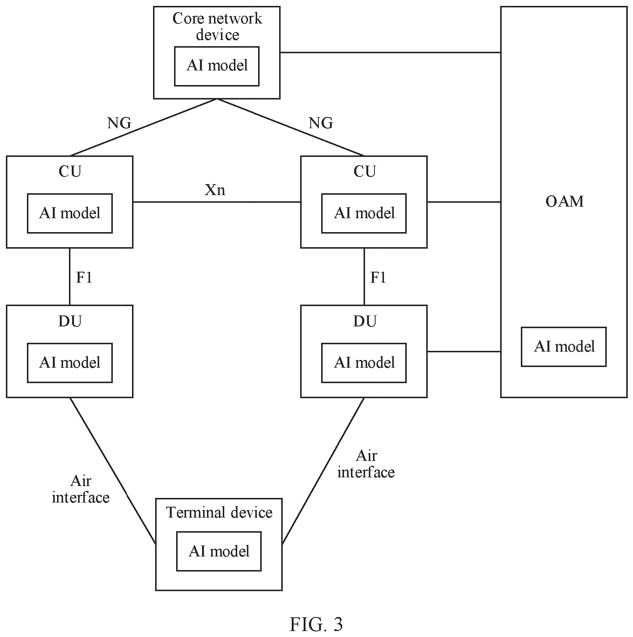

In this application, as shown in FIG. 2 or FIG. 3, an AI model may be deployed in at least one device in the core network device, the access network device, the terminal device, the OAM, or the like, and a corresponding function is implemented by using the AI model. The AI model represents a mapping relationship between an input and an output of the model. The AI model may be a neural network, a linear regression model, a decision tree model, a support vector machine (support vector machine, SVM), a Bayesian network, a Q-learning model, another machine learning model, or the like. In this application, the AI model may be used for load prediction, terminal device track prediction, channel state information prediction, optimal beam prediction, positioning prediction, and the like. The AI model may implement an AI-related algorithm, and the AI model may be implemented by using software, hardware, or a combination of software and hardware. In addition, the AI model may further perform policy inference from perspectives of network energy saving, mobility optimization, and the like based on a result of predicting network performance of the access network device by using a trained model, to obtain a proper and efficient energy saving policy, mobility optimization policy, and the like. In this application, the AI model may be referred to as a model for short.

In this application, AI models deployed in different nodes may be the same or different. That the models are different includes at least one of the following differences: a difference between structural parameters of the models, for example, a difference between quantities of layers, weight values, and/or the like of the models, a difference between input parameters of the models, a difference between output parameters of the models, or the like. The difference between input parameters of the models and/or the difference between output parameters of the models may be described as a difference between functions of the models. Different from FIG. 2, in FIG. 3, a function of the access network device is split into a CU and a DU. Optionally, the CU and the DU may be a CU and a DU in an O-RAN architecture. One or more AI models may be deployed in the CU, and/or one or more AI models may be deployed in the DU. Optionally, the CU in FIG. 3 may be further split into a CU-CP and a CU-UP. Optionally, one or more AI models may be deployed on the CU-CP, and/or one or more AI models may be deployed on the CU-UP. Optionally, in FIG. 2 or FIG. 3, OAM of the access network device and OAM of a core network device may be separately and independently deployed.

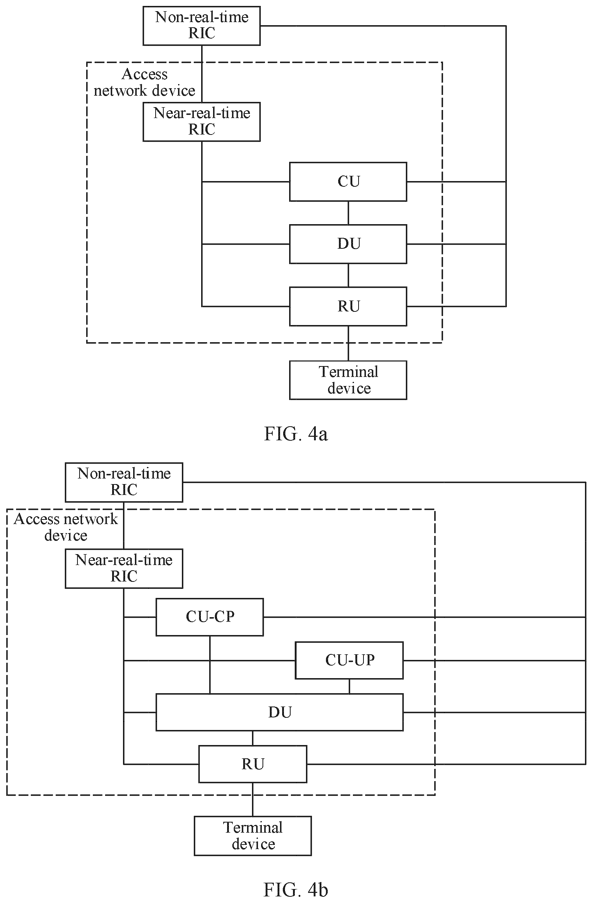

Optionally, FIG. 4a shows an architecture of a communication system according to this application.

In a first design, as shown in FIG. 4a, an access network device includes a near-real-time access network intelligent control (RAN intelligent controller, RIC) module, configured to perform model training and inference. For example, the near-real-time RIC may be configured to: train an AI model, and use the AI model for inference. For example, the near-real-time RIC may obtain information on a network side and/or a terminal device side from at least one of a CU, a DU, or an RU, and the information may be used as training data or inference data. Optionally, the near-real-time RIC may deliver an inference result to at least one of the CU, the DU, the RU, or a terminal device. Optionally, the CU and the DU may exchange the inference result. Optionally, the DU and the RU may exchange the inference result. For example, the near-real-time RIC delivers the inference result to the DU, and the DU forwards the inference result to the RU.

Alternatively, in a second design, as shown in FIG. 4a, a non-real-time RIC is included outside an access network device (optionally, the non-real-time RIC may be located in OAM or a core network device), and is configured to perform model training and inference. For example, the non-real-time RIC is configured to train an AI model and use the model for inference. For example, the non-real-time RIC may obtain information on a network side and/or a terminal device side from at least one of a CU, a DU, or an RU, and the information may be used as training data or inference data. An inference result may be delivered to at least one of the CU, the DU, the RU, or a terminal device. Optionally, the CU and the DU may exchange the inference result. Optionally, the DU and the RU may exchange the inference result. For example, the non-real-time RIC delivers the inference result to the DU, and the DU forwards the inference result to the RU.

Alternatively, in a third design, as shown in FIG. 4a, an access network device includes a near-real-time RIC, and a non-real-time RIC is included outside the access network device (optionally, the non-real-time RIC may be located in OAM or a core network device). As in the second design, the non-real-time RIC may be configured to perform model training and inference. Alternatively, as in the first design, the near-real-time RIC may be configured to perform model training and inference. Alternatively, the non-real-time RIC performs model training, and the near-real-time RIC may obtain AI model information from the non-real-time RIC, obtain information on a network side and/or a terminal device side from at least one of a CU, a DU, or an RU, and obtain an inference result based on the information and the AI model information. Optionally, the near-real-time RIC may deliver the inference result to at least one of the CU, the DU, the RU, or a terminal device. Optionally, the CU and the DU may exchange the inference result. Optionally, the DU and the RU may exchange the inference result. For example, the near-real-time RIC delivers the inference result to the DU, and the DU forwards the inference result to the RU. For example, the near-real-time RIC is configured to train a model A and use the model A for inference. For example, the non-real-time RIC is configured to: train a model B, and use the model B for inference. For example, the non-real-time RIC is configured to: train a model C, and send information about the model C to the near-real-time RIC, and the near-real-time RIC uses the model C for inference.

FIG. 4b is an architecture of another communication system according to this application. Compared with FIG. 4a, in FIG. 4b, a CU is separated into a CU-CP and a CU-UP.

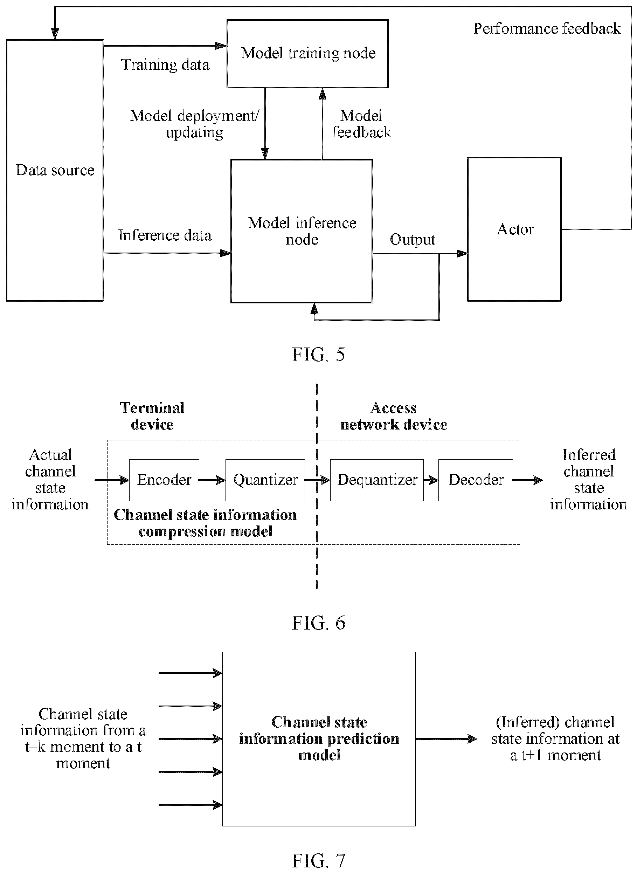

FIG. 5 is a diagram of an application architecture of an AI model. A data source (data source) is configured to store training data and inference data. A model training node (model training host) analyzes or trains training data (training data) provided by the data source, to obtain an AI model, and deploys the AI model in a model inference node (model inference host). Optionally, the model training node may further update the AI model that is deployed in the model inference node. The model inference node may further feed back related information of the deployed model to the model training node, so that the model training node performs optimization, updating, or the like on the deployed AI model.

Obtaining the AI model through learning by the model training node is equivalent to obtaining a mapping relationship between an input and an output of the model obtained through learning by the model training node based on the training data. The model inference node uses the AI model to perform inference based on the inference data provided by the data source, to obtain an inference result. The method may alternatively be described as follows: The model inference node inputs the inference data to the AI model, and obtains the output by using the AI model. The output is the inference result. The inference result may indicate a configuration parameter used (executed) by an actor object, and/or an operation performed by the actor object. The inference result may be planned by an actor (actor) entity in a unified manner, and sent to one or more actor objects (for example, network entities) for execution. Optionally, the actor entity or the actor object may feed back a parameter or a measurement amount collected by the actor entity or the actor object to the data source. This process may be referred to as performance feedback, and the fed-back parameter may be used as training data or inference data. Optionally, the actor entity or the actor object may further determine, based on the inference result output by the model inference node, feedback information related to model performance, and feed back the feedback information to the model inference node. The model inference node may feed back performance information, and the like of the model to the model training node based on the feedback information, so that the model training node performs optimization, updating, or the like on the deployed AI model. This process may be referred to as model feedback.

Currently, the 3rd generation partnership project (the 3rd generation partnership project, 3GPP) introduces discussion of an AI application scenario (AI use case). There are the following three AI application scenarios:

(1) Channel state information feedback enhancement (CSI feedback enhancement) scenario

Channel state information is a channel attribute of a communication link. A terminal device reports the channel state information to an access network device, so that the access network device selects a more suitable modulation and coding scheme (modulation and coding scheme, MCS) for the terminal device. The MCS is used to transmit data between the access network device and the terminal device.

The channel state information feedback enhancement scenario may specifically include two scenarios: a channel state information compression scenario and a channel state information prediction scenario.

The channel state information compression scenario is implemented based on a two-sided model (two-sided (AI/ML) model). FIG. 6 is a diagram of an example model. The two-sided model (namely, a channel state information compression model) includes an encoder and a quantizer on a terminal device side, and a decoder and a dequantizer on an access network device side. An input of the encoder is channel state information obtained by the terminal device by measuring a reference signal, and a representation form of the channel state information may be a feature vector, or the like obtained by decomposing an original channel matrix/a precoded channel matrix/a pair channel. An output of the encoder is a floating-point number vector carrying compressed channel state information. Further, the quantizer maps the floating-point number vector carrying the compressed channel state information onto a quantized bit sequence (a possible quantization manner includes scalar quantization, vector quantization, or the like). Functions of the decoder and the dequantizer are opposite to functions of the encoder and the quantizer, and the channel state information output by the decoder may be considered as inferred channel state information. For example, the encoder or the decoder may be implemented by using an AI model such as a convolutional neural network (convolutional neural network, CNN) or a transformer. In this application, processes performed by the encoder and the quantizer on the terminal device side may be collectively referred to as a compression process, and processes performed by the decoder and the dequantizer on the access network device side may be collectively referred to as a decompression process.

The channel state information prediction scenario is implemented based on a one-sided model (one-sided (AI/ML) model) deployed on the terminal device side. FIG. 7 is a diagram of an example model. An input of the one-sided model (namely, a channel state information prediction model) is channel state information at a plurality of historical moments (a moment t-k to a moment t shown in FIG. 7, and both k and t are positive integers), and an output of the one-sided model is channel state information (namely, inferred channel state information) at a target moment (a moment t+1 shown in FIG. 7). The one-sided model may be specifically a multilayer perceptron (multilayer perceptron, MLP).

(2) Beam management (beam management, BM) scenario

The BM scenario is implemented based on a one-sided model, and is mainly used to find a strongest transmit/receive beam pair (beam pair). The one-sided model may be deployed on a network side (for example, in an access network device), or may be deployed in a terminal device.

When the model is deployed on a terminal device side, the model is used to predict an optimal beam on an access network device side. The model may be provided by the terminal device or delivered by the network side to the terminal device. In a model use process, the terminal device measures a downlink synchronization signal block (synchronization signal block, SSB) and a channel state information reference signal (channel state information-reference signal, CSI-RS), to obtain angle domain information of a channel; inputs the angle domain information of the channel into the model, to infer top k beams (for example, first k beams in reference signal received power (reference signal received power, RSRP) rankings, where k is a positive integer) in a plurality of beams; and feeds back identifiers of the top k inferred beams to the access network device (used for a second round of scanning and determining of a subsequent optimal beam).

When the model is deployed on the network side, the model performs beam prediction based on channel angle domain information measured by the terminal device, for example, performs prediction based on a beam RSRP measured by the terminal device. The access network device scans a part of beams in a full codebook (namely, sparse beam scanning). The terminal device measures a sparse beam, to obtain an RSRP, and feeds back the RSRP to the access network device. The access network device inputs the obtained RSRP into the model, determines top k beams (for example, first k beams in RSRP rankings, where k is a positive integer), and performs a second round of scanning on the top k beams. The terminal device reports an optimal beam in the second round after measurement.

(3) Positioning accuracy enhancement (positioning accuracy enhancements) scenario

The positioning accuracy enhancement scenario is implemented based on a one-sided model. A line of sight (line of sight, LOS)/non line of sight (non line of sight, NLOS) can be identified based on AI, thereby improving positioning accuracy in a case of a small quantity of transmission reception point (transmission reception point, TRP) antennas. For example, in an indoor scenario (which may be represented as a heavy NLOS scenario in English), there may be no enough quantity of LOS paths, and the terminal device can improve positioning accuracy in the indoor scenario through AI model-based positioning.

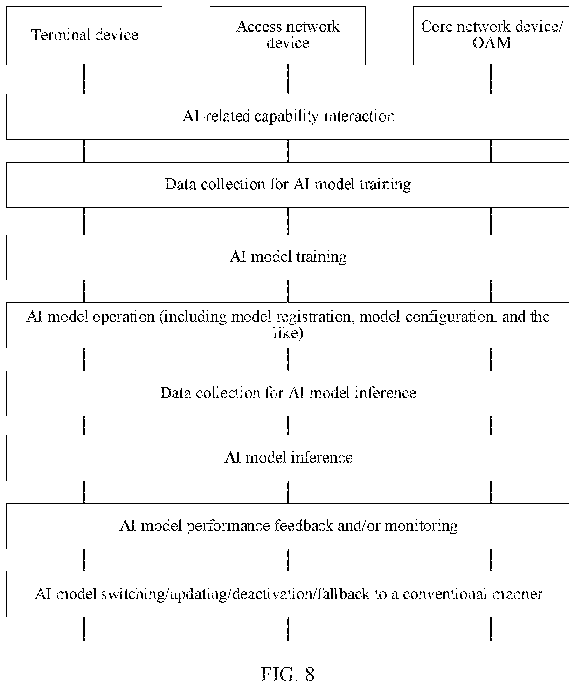

Lifecycle management (lifecycle management, LCM) of an AI model is management of the AI model in an entire process from a start to an end. It can be understood as steps/procedures/policies that needs to be followed by an organization/individual when using AI to obtain actual commercial value. A possible overall signaling procedure of LCM of the AI model may include: AI-related capability interaction, data collection for AI model training, AI model training, AI model operation (including model registration, model configuration, and the like), data collection for AI model inference, AI model inference, AI model performance feedback and/or monitoring, and AI model switching/updating/deactivation/fallback to a conventional manner. For details, refer to FIG. 8.

In the foregoing AI model performance feedback and/or monitoring, how to quickly identify that inference performance (or referred to as computing performance, model performance, prediction performance, or the like) of the AI model deteriorates is a technical problem to be urgently resolved currently.

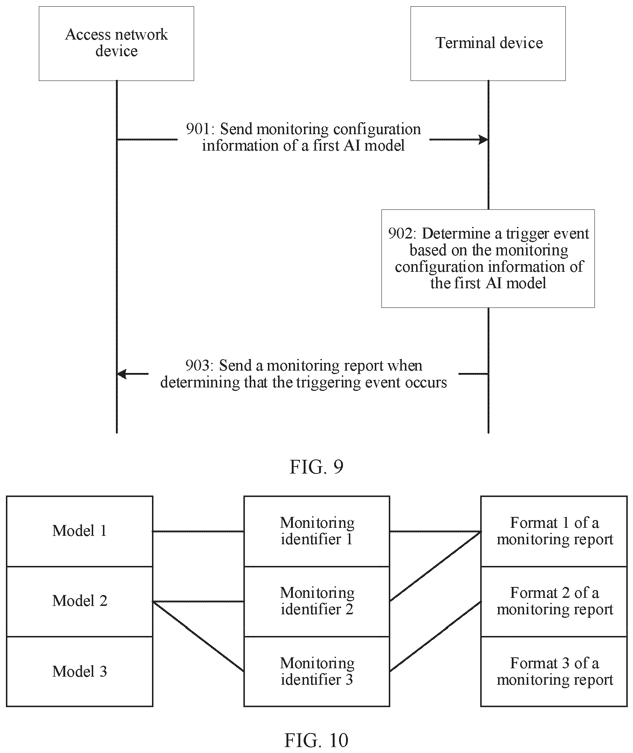

FIG. 9 is a schematic flowchart of a communication method according to an example of this application. When a communication network is in an AI mode, inference performance of a first AI model associated with the AI mode is monitored, and the first AI model in the communication network is modified when it is identified that the inference performance of the AI model deteriorates.

The first AI model is explained in advance as follows: The first AI model is deployed in a model inference entity (or referred to as a model inference node), and there may be one or more model inference entities. For example, when the first AI model is used in a channel state information prediction scenario and a beam management scenario, the first AI model is a one-sided model, and the first AI model may be deployed on a terminal device side; or when the first AI model is used in a positioning accuracy enhancement scenario, the first AI model is a one-sided model, and the first AI model may be deployed in a terminal device, an access network device (for example, a DU), or a location management function (location management function, LMF); or when the first AI model is used in a channel state information compression scenario, the first AI model is a two-sided model. It may be understood that the two-sided model specifically includes a first AI submodel deployed in a terminal device and a second AI submodel deployed in an access network device (for example, the DU).

Step 901: The access network device sends monitoring configuration information of the first AI model to the terminal device, and correspondingly, the terminal device receives the monitoring configuration information of the first AI model from the access network device. It may be understood that the monitoring configuration information is used by the terminal device to monitor inference performance of the first AI model.

In a possible implementation, the access network device further sends a model identifier of the first AI model to the terminal device. The model identifier indicates that the monitoring configuration information is used to monitor the inference performance of the first AI model. In a possible implementation, the access network device further sends a function identifier of a function implemented by the first AI model to the terminal device. The function identifier indicates that the monitoring configuration information is used to monitor inference performance that is of the first AI model and that exists when the first AI model implements the function.

For example, a model identifier of a model in a channel state information enhancement scenario may be "1-X", "1" represents the model in the channel state information enhancement scenario, and "X" represents a model in the channel state information compression scenario or a model in the channel state information prediction scenario. For example, a model identifier of the model in the channel state information compression scenario is represented as "1-1", and a model identifier of the model in the channel state information prediction scenario is represented as "1-2". Further, the model in the channel state information compression scenario may compress channel state information into 120 bits or 240 bits, a corresponding function identifier when the model in the channel state information compression scenario compresses the channel state information into 120 bits is represented as "1-1-1", and a corresponding function identifier when the model in the channel state information compression scenario compresses the channel state information into 240 bits is represented as "1-1-2".

For another example, a model identifier of a model in the beam management scenario may be "2-X", and a model identifier of a model in the positioning accuracy enhancement scenario may be "3-X".

In a possible implementation, the monitoring configuration information of the first AI model includes one or more trigger events, and the trigger event is used to trigger the terminal device to report a monitoring report to the access network device. It may be understood that in a process in which the terminal device monitors the first AI model, if it is determined that a trigger event occurs, the terminal device reports the monitoring report to the access network device. For example, in the process in which the terminal device monitors the first AI model, if it is determined that any trigger event in the monitoring configuration information occurs (or all trigger events occur, or trigger events that account for a proportion exceeding a preset proportion occur), the terminal device reports the monitoring report to the access network device.

The following provides explanations with reference to the channel state information compression scenario and the channel state information prediction scenario.

In the channel state information compression scenario, the monitoring configuration information of the first AI model includes one or more of the following trigger events:

K1 to K12 may be considered as trigger events related to performance of the first AI model, and K13 to K18 may be considered as trigger events related to an application condition of the first AI model.

K1: A value of a squared generalized cosine similarity (squared generalized cosine similarity, SGCS) is less than an SGCS threshold. The SGCS is computed by the terminal device based on first channel state information and second channel state information. In this application, the first channel state information is channel state information obtained by the terminal device by actually measuring a reference signal, and the second channel state information is channel state information obtained when the terminal device compresses the first channel state information based on the first AI submodel, to obtain a compression result, and the access network device decompresses the compression result based on the second AI submodel. For a specific implementation, refer to descriptions in step 1008. The threshold corresponding to the SGCS may be 0.8. Herein, a performance indicator may alternatively be a normalized mean square error (normalized mean square error, NMSE), a spatial chordal distance (chordal distance), or the like.

K2: A data size of the second channel state information cannot match a data size of the first channel state information. The first channel state information is channel state information obtained by the terminal device by actually measuring a reference signal, and the second channel state information is channel state information obtained when the terminal device compresses the first channel state information based on the first AI submodel, to obtain a compression result, and the access network device decompresses the compression result based on the second AI submodel.

K3: A two-sided model (namely, the first AI submodel located in the terminal device and the second AI submodel located in the access network device) cannot simultaneously operate. An operation of the model may be specifically one or more of activation, deactivation, switching, and updating. To be specific, if any submodel in the two-sided model completes an operation, but the other submodel does not complete the same operation within a preset time period, it indicates that the two-sided model cannot simultaneously operate.

K4: A value of a quantization error is greater than a quantization error threshold. The quantization error is an error caused in a quantization process (for example, the quantizer in FIG. 6), and is represented as a difference between a quantization result and a quantized analog parameter.

K5: A quantizer of the first AI submodel in the terminal device does not match a dequantizer of the second AI submodel in the access network device. For example, the quantizer in the terminal device uses a scalar quantization manner, and the dequantizer in the access network device uses a vector quantization manner. For another example, a dictionary used by the terminal device and a dictionary used by the access network device do not match.

K6: When the terminal device performs online optimization (namely, fine-tuning (fine-tuning)) on a baseline model, a convergence speed when the terminal device trains a model is less than a speed threshold, and/or training duration when the terminal device trains the model is greater than a training duration threshold. The baseline model may be a pre-trained first AI model. To be specific, the baseline model may meet a general performance requirement, but is not in an optimal state. In this way, the terminal device may collect live network data online, and further optimize and train the baseline model based on the live network data collected online.

K7: The terminal device learns through monitoring that a distribution of input data of the first AI model drifts, for example, a probability density function (probability density function, PDF) of data in a period of time shifts (which may be specifically quantized based on a mathematical statistical indicator such as a concentration/deconcentration degree or a skew state/peak state).

K8: After the AI mode of the communication network is enabled (in other words, the first AI model is run), the terminal device determines that a good yield rate of a channel quality indicator (channel quality indicator, CQI) is less than a good yield rate threshold.

K9: The terminal device monitors a ratio of payload (payload)/throughput (throughput). The ratio may be denoted as alpha. That is, alpha=throughput/payload. The terminal device determines that alpha is less than an alpha threshold.

Alternatively, a correspondence between a value interval and both the AI module and the ratio of air interface load/throughput may be configured in the terminal device. For example, the first AI model corresponds to a value interval 1, and a second AI model corresponds to a value interval 2. The terminal device learns through monitoring that the ratio of air interface load/throughput exceeds the value interval corresponding to the first AI model (for example, the monitored ratio of air interface load/throughput falls within the value interval 2).

It may be understood that, when the air interface load is large and the access network device does not have a high recovery accuracy requirement for the channel state information, a high compression rate (for example, Float 32 bits to 120 bits, where SGCS=0.853) is considered, in other words, the first channel state information (namely, the channel state information obtained by the terminal device through measurement) is compressed into less bits, thereby relieving air interface load pressure; or when the air interface load is small and the access network device has a high recovery accuracy requirement for the channel state information, it is considered to compress the first channel state information in a manner with a low compression rate (for example, Float 32 bits to 240 bits, where SGCS=0.9144). In this application, 120 bits or 240 bits are a quantity of bits for transmitting or storing the compressed channel state information.

K10: A throughput computed on the terminal device side is less than a throughput threshold.

K11: The terminal device obtains one or more of the following parameters through measurement: a reference signal received power (reference signal received power, RSRP), reference signal received quality (reference signal received quality, RSRQ), and a signal to interference plus noise ratio (signal to interference and noise ratio, SINR). In addition, the parameter obtained through measurement is less than a corresponding parameter threshold.

K12: A hypothetical (hypothetical) block error rate (block error ratio, BLER) obtained by the terminal device through measurement is greater than a BLER threshold.

K13: A synchronization signal block (synchronization signal block, SSB)/channel state information reference signal (channel state information-reference signal, CSI-RS) index (index) of the terminal device changes. For example, the SSB/CSI-RS index measured by the terminal device is not within several preset index ranges, or a configured maximum resource quantity does not match a corresponding carrier frequency range.

K14: A moving speed of the terminal device changes.

K15: A radio environment in which the terminal device is located changes. For example, the terminal device moves from the indoor (indoor) to the outdoor (outdoor), or enters the indoor from the outdoor. For another example, the terminal device enters a cell (cell) or a zone (zone) that does not support an AI function.

K16: A computing capability of the terminal device changes. For example, a computing speed of the terminal device becomes slower. Storage space of the terminal device is greater than a storage space threshold; or storage space that needs to be occupied by the first AI model in the terminal device is greater than a storage space threshold; or computing complexity of the first AI model on the terminal device side exceeds a complexity threshold. The complexity threshold is, for example, one million floating-point operations (floating point operations, FLOPs).

K17: Power consumption of the terminal device changes. For example, power consumption of the terminal device in a period of time exceeds a power consumption threshold; or a remaining power of the terminal device is less than a power threshold.

K18: Meta information of the first AI model is abnormal. For example, the meta information of the first AI model is lost or incorrect. Further, when the first AI model is a two-sided model, meta information of the first AI submodel does not match meta information of the second AI submodel. The meta information herein may be understood as all information required for configuring/running the first AI model in addition to the first AI model. For example, the information may be specifically indication information indicating that the first AI model is a one-sided model or a two-sided model, an application scenario type of the first AI model, an input/output configuration of the first AI model, information about a resource occupied by the first AI model, an operating environment of the first AI model, or the like.

In the channel state information prediction scenario, the monitoring configuration information of the first AI model includes one or more of the following trigger events:

K19 to K25 may be considered as trigger events related to performance of the first AI model. For a trigger event related to an application condition of the first AI model in the channel state information prediction scenario, refer to K13 to K18.

Optionally, the channel state information prediction scenario may further include a trigger event that is related to the performance of the first AI model and that corresponds to the channel state information compression scenario. For example, the channel state information prediction scenario may further include trigger conditions K1, K6, K7, K8, and the like.

K19: An RSRP obtained by the terminal device through inference based on the first AI model is less than an RSRP threshold.

K20: An absolute value of a difference between the RSRP obtained by the terminal device through inference based on the first AI model and an RSRP actually measured by the terminal device is greater than an absolute value threshold.

K21: The RSRP obtained by the terminal device through inference based on the first AI model is greater than a first RSRP threshold, and the RSRP threshold actually measured by the terminal device is less than a second RSRP threshold (it is assumed that the terminal device periodically performs legacy (legacy) channel state information measurement).

K22: The terminal device obtains RSRPs at a plurality of moments through inference based on the first AI model, and an absolute value of a difference between RSRPs at two adjacent moments is greater than an absolute value threshold. For example, an absolute value threshold of a difference between $RSRP_{T0}$ and $RSRP_{T1}$ that are respectively predicted by the terminal device at two moments T0 and T1 is 4. An absolute value of the difference between $RSRP_{10}$ and $RSRP_{T1}$ is 5.

K23: In a process in which the terminal device obtains the channel state information through inference based on the first AI model, the terminal device continuously obtains a preset quantity of beam failure instances (beam failure instance, BFI) through monitoring within preset duration.

K24: In a process in which the terminal device obtains the channel state information through inference based on the first AI model, a hypothetical BLER predicted within preset duration is greater than a BLER threshold.

K25: In a process in which the terminal device obtains the channel state information through inference based on the first AI model, when a CSI-RS is considered in a physical downlink control channel (physical downlink control channel, PDCCH) area, radio frequency (radio frequency, RF) switching duration is greater than a duration threshold.

In this application, the access network device may further send, to the terminal device, monitoring configuration information of a first AI model applicable to the beam management scenario. A trigger condition included in the monitoring configuration information is, for example, K26: Inference accuracy is less than a prediction accuracy threshold. The access network device may alternatively send, to the terminal device, monitoring configuration information of a first AI model applicable to the positioning accuracy enhancement scenario. A trigger condition included in the monitoring configuration information is, for example, K27: An LOS/NLOS identification rate is less than an identification rate threshold; or a trigger condition is, for example, K28: A distance between real coordinates and inferred coordinates is greater than a distance threshold. Certainly, the monitoring configuration information further includes another trigger condition. Examples are not provided one by one in this application.

Further, the trigger event may further include preset duration (or referred to as trigger duration used to optimize an AI model (time to trigger for optimizing AI model)). For example, the trigger event K1 includes that the value of the SGCS is less than the SGCS threshold, and preset duration that needs to be reached by duration. If the terminal device determines that the value of the SGCS is less than the SGCS threshold and the duration reaches the preset duration, the terminal device reports the monitoring report to the access network device. In other words, if the terminal device determines that duration in which the value of the SGCS is less than the SGCS threshold does not reach the preset duration, the terminal device does not need to report the monitoring report to the access network device. Further, preset duration of any two events that include respective preset duration in K1 to K25 may be the same or different. For example, preset duration in K1 is for the SGCS, and preset duration in K4 is for the quantization error. The preset duration in K1 and the preset duration in K4 may be the same or different.

Further, the trigger events further include respective corresponding preset hysteresis (hysteresis) conditions, and the preset hysteresis condition may specifically include a hysteresis value, to improve robustness of a system. For details, refer to descriptions in step 903.

It may be understood that, in some possible implementations, the trigger event may further include a performance indicator and a trigger condition corresponding to the performance indicator. K1 is used as an example. The performance indicator is the SGCS, and the trigger condition corresponding to the performance indicator is that the value of the SGCS is less than the SGCS threshold, or the trigger condition corresponding to the performance indicator is that the value of the SGCS is less than the SGCS threshold and the duration reaches the preset duration, or the trigger condition corresponding to the performance indicator is that the value of the SGCS is less than the SGCS threshold, the duration reaches the preset duration, and a preset hysteresis condition is met. Another trigger event is similar, and is not described again.

In another possible implementation, the monitoring configuration information of the first AI model includes a plurality of trigger condition templates (template) and a template identifier corresponding to each trigger condition template. For example, the monitoring configuration information of the first AI model includes a trigger condition template 1 to a trigger condition template 4, and template identifiers (denoted as a template AA1 to a template AA4) respectively corresponding to the trigger condition template 1 to the trigger condition template 4.

The following describes the trigger condition template 1 to the trigger condition template 4 as examples.

Trigger condition template 1: A value of a first field is less than that of a second field (namely, a threshold).

The "first field" and the "second field" are to-be-padded/to-be-configured/to-be-assigned fields.

For example, in a channel state information feedback enhancement scenario (namely, the channel state information prediction scenario and/or the channel state information compression scenario), the first field may be configured as one or more of the following performance indicators: an SGCS, an NMSE, an average user-perceived throughput (user-perceived throughput, UPT), and the like; in a beam management enhancement scenario, the first field may be configured as one or more of the following performance indicators: accuracy of predicting an optimal beam, accuracy of predicting an RSRP, and the like. In the positioning accuracy enhancement scenario, the first field may be configured as one or more of the following performance indicators: horizontal positioning accuracy, an LOS/NLOS identification rate, a time of arrival (time of arrival, TOA), and the like. The horizontal positioning accuracy may be considered as a parameter in direct positioning, and the LOS/NLOS identification rate may be considered as a parameter in auxiliary positioning. In this application, the performance indicators in various scenarios may be understood as intermediate (intermediate) key performance indicators (key performance indicator, KPI).

In addition, the first field may alternatively be configured as one or more of the following performance indicators: a throughput, an RSRP, an SINR, a BLER, and the like. The first field may be understood as an eventual KPI (eventual KPI). The first field may alternatively be configured as one or more of the following performance indicators: a model inference delay, computing complexity, overheads, power consumption, storage, a hardware requirement (for example, a processing delay is fixed), a generalization capability, and the like. The first field may be understood as another KPI (another KPI). It may be understood that the eventual KPI and the another KPI may be generally used in the channel state information feedback enhancement scenario (namely, the channel state information prediction scenario and/or the channel state information compression scenario), the beam management enhancement scenario, and the positioning accuracy enhancement scenario.

Further, the second field may be configured. For example, the first field is configured as "SGCS", and the second field may be configured as "0.8". In other words, the trigger condition is that the SGCS is less than 0.8.

In addition, the first field may alternatively be configured as a performance indicator in a condition. For example, in the channel state information prediction scenario, the first field is configured to be the RSRP (namely, the inferred RSRP/an inference result) predicted by the terminal device based on the first AI model. For another example, in the channel state information prediction scenario, the first field is configured to be the RSRP (namely, an actual RSRP/an actual result) actually measured by the terminal device.

Trigger condition template 2: A value of a first field is greater than that of a second field (namely, a threshold).

The trigger condition template 2 is similar to the trigger condition template 1. A difference lies in that the value of the first field is less than that of the second field in the trigger condition template 1, and the value of the first field is greater than that of the second field in the trigger condition template 2.

Trigger condition template 3: A difference between a value of a third field and a value of a fourth field is greater than a fifth field (namely, a threshold).

The "third field", the "fourth field", and the "fifth field" are to-be-padded/to-be-configured/to-be-assigned fields.

For example, the third field and the fourth field are specifically a same performance indicator at different moments. For example, the same performance indicator may be configured as an RSRP, the third field and the fourth field may be specifically an RSRP obtained by the terminal device by separately measuring a reference signal at two adjacent moments, and the fifth field may be configured as -4.

For another example, the third field and the fourth field are specifically an actual result and an inference result corresponding to the performance indicator. For example, the performance indicator may be configured as an RSRP, the third field is specifically an RSRP actually measured by the terminal device, the fourth field is specifically an RSRP obtained by the terminal device through inference based on the first AI model, and the fifth field may be configured as 2.

Trigger condition template 4: A difference between a value of a third field and a value of a fourth field is less than a fifth field (namely, a threshold). The trigger condition template 4 is similar to the trigger condition template 3. A difference lies in that the difference between the value of the third field and the value of the fourth field is greater than the fifth field in the trigger condition template 3 and the difference between the value of the third field and the value of the fourth field is less than the fifth field in the trigger condition template 4.

It may be understood that the trigger condition template 1 to the trigger condition template 4 are merely described as examples. In this application, the access network device may further deliver another trigger condition template to the terminal device. For example, an absolute value of a difference between values of two fields is greater than a threshold, or an absolute value of a difference between values of two fields is less than a threshold. In this embodiment of this application, the trigger condition template may be understood as a manner or method used by the terminal device to determine whether the value of the performance indicator of the first AI model meets the trigger condition corresponding to the performance indicator, that is, a manner or method used by the terminal device to determine whether a trigger event occurs. Alternatively, it may be understood that the trigger condition template is a predefined mode or template used by the terminal device to generate a trigger condition. Each trigger condition template corresponds to one template identifier.

Further, the monitoring configuration information of the first AI model further includes a template identifier (denoted as a target template identifier) indicating a target trigger condition template, and a performance indicator and a threshold that need to be configured in the target trigger condition template. For example, the target trigger condition template is one of the plurality of trigger condition templates in the monitoring configuration information.

For example, the monitoring configuration information of the first AI model further includes "template AA1, SGCS, 0.8", to indicate that the terminal device needs to configure two values "SGCS" and "0.8" in the first field and the second field of the trigger condition template 1, so as to obtain a trigger condition corresponding to the trigger condition template 1, to be specific, the SGCS is less than 0.8.

For another example, the monitoring configuration information of the first AI model further includes "template AA3, RSRP1, RSRP2, -4", to indicate that the terminal device needs to configure three values "RSRP1", "RSRP2", and "4" in the third field, the fourth field, and the fifth field of the trigger condition template 3, where RSRP1 represents an RSRP obtained by the terminal device through inference based on the first AI model, and RSRP2 represents an RSRP actually measured by the terminal device, to obtain a trigger condition corresponding to the trigger condition template 3, to be specific, RSRP1-RSRP2 is greater than 4.

Optionally, the monitoring configuration information of the first AI model further includes the target template identifier, the performance indicator and the threshold that need to be configured in the target trigger condition template, and an identifier of a trigger condition, to indicate a specific generated trigger condition. Still with reference to the foregoing example, if the monitoring configuration information of the first AI model includes "template AA1, SGCS, 0.8", and an identifier "K1" of the trigger condition, it indicates that the trigger condition of K1 is "the SGCS is less than 0.8".

In another possible implementation, the monitoring configuration information of the first AI model includes a plurality of target template identifiers indicating a plurality of target trigger condition templates, a performance indicator and a threshold that need to be configured in each target trigger condition template, and an identifier of a trigger condition. The plurality of target trigger condition templates are a plurality of target trigger condition templates in the plurality of trigger condition templates. For example, the monitoring configuration information of the first AI model includes an identifier "K21" of a trigger condition and "template AA1, RSRP2, -50, template AA2, RSRP1, -40", to indicate the terminal device to configure two values "RSRP2" and "-50" in the first field and the second field of the trigger condition template 1 and configure two values "RSRP1" and "-40" in the first field and the second field of the trigger condition template 2, where RSRP1 represents an RSRP obtained by the terminal device through inference based on the first AI model, and RSRP2 represents an RSRP actually measured by the terminal device, so as to obtain trigger conditions respectively corresponding to the trigger condition template 1 and the trigger condition template 2. The trigger condition of K21 including the two trigger conditions is "RSRP 1 is greater than -40, and RSRP2 is less than -50".

Optionally, the trigger condition template may further include a to-be-padded/to-be-configured/to-be-assigned field that indicates preset duration. Correspondingly, the monitoring configuration information of the first AI model may further include a value that is of the preset duration and that is used to fill in the field. For example, the monitoring configuration information of the first AI model includes "template AA1, SGCS, 0.8, 1 ms", and an identifier "K1" of a trigger condition, and "1 ms" indicates the value that is of the preset duration and that is used to fill in the field. Correspondingly, the trigger condition of K1 is "the SGCS is less than 0.8 and the duration is 1 ms".

Optionally, the trigger condition template may further include a to-be-padded/to-be-configured/to-be-assigned field that indicates a preset hysteresis condition. Correspondingly, the monitoring configuration information of the first AI model may further include a value that is of the preset hysteresis condition and that is used to fill in the field. For example, the monitoring configuration information of the first AI model includes "template AA1, SGCS, 0.8, 1 ms, 0.05", and an identifier "K1" of a trigger condition, and "0.05" indicates the value that is of the preset hysteresis condition and that is used to fill in the field. Correspondingly, the trigger condition of K1 is "the SGCS is less than 0.8, the duration is 1 ms, and the preset hysteresis condition 0.05 is met (for specific descriptions, refer to the following descriptions in step 903)".

It may be understood that the access network device may send the monitoring configuration information of the first AI model to the terminal device by using one message. To be specific, the access network device sends, to the terminal device by using one message, the plurality of trigger condition templates, the template identifier corresponding to each trigger condition template, the target template identifier, and the performance indicator and the threshold that need to be configured in the target trigger condition template. The message may be an RRC reconfiguration (RRC reconfiguration) message. Alternatively, the access network device may send the monitoring configuration information of the first AI model to the terminal device by using a plurality of messages. For example, the access network device sends the plurality of trigger condition templates and the template identifier corresponding to each trigger condition template to the terminal device by using a message 1. Then, the access network device sends, to the terminal device by using a message 2, the target template identifier, and the performance indicator and the threshold that need to be configured in the target trigger condition template. The message 1 and the message 2 may also be RRC reconfiguration messages.

This helps implement flexible configuration, and reduces signaling overheads when the access network device performs configuration for the terminal device.

In a possible manner, the monitoring configuration information of the first AI model further includes a format of the monitoring report. To be specific, the format indicates a format followed when the terminal device reports the monitoring report to the access network device. The monitoring report indicates inference performance that is of the first AI model and that exists when the trigger event occurs.

For example, the monitoring report may include a report indicator and a value of the report indicator. There may be one or more report indicators, and each report indicator corresponds to a report indicator identifier (reportMetricID). The report indicator is, for example, a result based on AI model inference accuracy, or a measurement result (for example, an RSRP, an RSRQ, or an SINR) based on some conventional measurement quantities. Further, the report indicator may be a performance indicator in the trigger event. Correspondingly, a value of the report indicator may be a value of the performance indicator in the trigger event. That is, the monitoring report may include the trigger event. For example, the trigger event includes the SGCS and the value of the SGCS, and the monitoring report includes the SGCS and the value of the SGCS (namely, the trigger event). In addition, the monitoring report further includes a non-trigger event, for example, an RSRP obtained by the terminal device by actually measuring the reference signal.

In a possible manner, there may be a plurality of formats of monitoring reports, and formats of any two monitoring reports are different. For example, the SGCS and the value of the SGCS, and the RSRP and a value of the RSRP need to be reported in a monitoring report 1; and the SGCS and the value of the SGCS, and a terminal throughput and a value of the throughput need to be reported in a monitoring report 2.

Further, in an example, a format of each monitoring report corresponds to one or more trigger conditions. For example, the reports of the monitoring reports include a format 1, a format 2, a format 3, and a format 4. The format 1 corresponds to the trigger condition K1 to the trigger condition K4, the format 2 corresponds to the trigger condition K5 to the trigger condition K15, the format 2 corresponds to the trigger condition K16 to the trigger condition K25, and the format 4 corresponds to the trigger condition K26 and the trigger condition K27.

In another example, a format of each monitoring report corresponds to one or more AI scenarios (or models in the AI scenarios). For example, the formats of the monitoring reports include a format 1, a format 2, and a format 3. The format 1 corresponds to the channel state information enhancement scenario (namely, the channel state information prediction scenario and the channel state information compression scenario), the format 2 corresponds to the beam management scenario, and the format 3 corresponds to the positioning accuracy enhancement scenario. With reference to the foregoing example of the model identifier, the monitoring configuration information of the first AI model may include the following correspondence: format 1 and 1-X. To be specific, the format 1 of the monitoring report corresponds to a model whose identifier is "1-X" (namely, a model in the channel state information enhancement scenario).

In a possible manner, the monitoring configuration information of the first AI model further includes a monitoring identifier, and the monitoring identifier is used to associate the format of the monitoring report with the first AI model. For example, the monitoring configuration information of the first AI model includes a correspondence between a monitoring identifier, an identifier of a format of a monitoring report, and an identifier of a first AI model. The terminal device may monitor a performance indicator of a first AI model corresponding to each monitoring identifier based on the monitoring identifier, and when determining that the performance indicator of the first AI model meets a trigger condition corresponding to the performance indicator, report a monitoring report corresponding to the monitoring identifier to the access network device based on a format of the monitoring report.

FIG. 10 shows an association relationship according to an example of this application. The association relationship includes a monitoring identifier 1 to a monitoring identifier 3. The monitoring identifier 1 is used to associate a model 1 with a format 1 of a monitoring report. It may be understood that when performing monitoring corresponding to the monitoring identifier 1, the terminal device may monitor a performance indicator of the model 1, and when determining that the performance indicator of the model 1 meets a trigger condition of the performance indicator, report the monitoring report based on the format 1 of the monitoring report. A monitoring identifier 2 is used to associate a model 2 with the format 1 of the monitoring report. It may be understood that when performing monitoring corresponding to the monitoring identifier 2, the terminal device may monitor a performance indicator of the model 2, and when determining that the performance indicator of the model 2 meets a trigger condition of the performance indicator, report the monitoring report based on the format 1 of the monitoring report. The monitoring identifier 3 is used to associate the model 2 with the format 2 of the monitoring report. It may be understood that when performing monitoring corresponding to the monitoring identifier 2, the terminal device may monitor a performance indicator of the model 2, and when determining that the performance indicator of the model 2 meets a trigger condition of the performance indicator, report the monitoring report based on the format 2 of the monitoring report.

Step 902: The terminal device determines the trigger event based on the monitoring configuration information of the first AI model.

In a possible implementation, the monitoring configuration information of the first AI model includes the one or more trigger events, and the terminal device may obtain the one or more trigger events from the monitoring configuration information of the first AI model.

In another possible implementation, the monitoring configuration information of the first AI model includes the plurality of trigger condition templates, the template identifier corresponding to each trigger condition template, the target template identifier, and the performance indicator and the threshold that need to be configured in the target trigger condition template. Correspondingly, the terminal device may select the target trigger condition template from the plurality of trigger condition templates based on the target template identifier, and then separately configure, in fields included in the target trigger condition template, the performance indicator and the threshold that need to be configured in the target trigger condition template, to obtain the trigger event. In addition, the monitoring configuration information of the first AI model further includes preset duration and/or a preset hysteresis condition that need/needs to be configured in the target trigger condition template, and the terminal device may further configure the preset duration and/or the preset hysteresis condition in fields in the target trigger condition template.

It may be understood that the terminal device may determine the one or more trigger events based on the monitoring configuration information of the first AI model. With reference to the example in step 901, the monitoring configuration information of the first AI model includes "K1, template AA1, SGCS, 0.8", so that a trigger condition used to generate K1 is "the SGCS is less than 0.8"; and the monitoring configuration information of the first AI model further includes "K21, template AA1, RSRP2, -50, template AA2, RSRP1, -40", so that a trigger condition used to generate K21 is "RSRP1 is greater than -40, and RSRP2 is less than -50".

It may also be understood that each of the plurality of trigger condition templates indicates the trigger condition. Correspondingly, when the terminal device determines whether a specific trigger event occurs, details may be as follows: The terminal device determines a target trigger condition template corresponding to the trigger event from the plurality of trigger condition templates based on a template identifier corresponding to the trigger event, and then determines, based on the target trigger condition template and a performance indicator and a threshold that correspond to the trigger event, whether a value of a performance indicator that is of the first AI model and that corresponds to the trigger event meets a trigger condition corresponding to the performance indicator, to determine whether the trigger event occurs. For example, the target trigger condition template is the trigger condition template 1. The terminal device may determine, based on the performance indicator and the threshold that correspond to the trigger event, and the target trigger condition template, whether a value of the performance indicator corresponding to the trigger event is less than the threshold corresponding to the trigger event. If the value of the performance indicator corresponding to the trigger event is less than the threshold corresponding to the trigger event, the terminal device determines that the trigger event occurs; or if the value of the performance indicator corresponding to the trigger event is not less than the threshold corresponding to the trigger event, the terminal device determines that the trigger event does not occur.

Step 903: The terminal device sends the monitoring report to the access network device when determining that the trigger event occurs. Correspondingly, the access network device receives the monitoring report from the terminal device. It may be understood that the monitoring report indicates the inference performance that is of the first AI model and that exists when the trigger event occurs.

In a possible manner, that the terminal device determines that the trigger event occurs may be specifically that the terminal device determines that the value of the performance indicator in the trigger event meets the trigger condition of the performance indicator in the trigger event. For example, the trigger event is K1. When the terminal device determines that the value of the SGCS meets the trigger condition of the SGCS (in other words, the SGCS is less than the SGCS threshold), the terminal device determines that the trigger event K1 occurs.

The following separately uses the channel state information prediction scenario, the channel state information compression scenario, the beam management enhancement scenario, and the positioning accuracy enhancement scenario as examples to describe a case in which the terminal device determines that the trigger event occurs.

In the channel state information prediction scenario:

The first AI model is a one-sided model, the first AI model is deployed in the terminal device, and the inference result is obtained by the terminal device through inference based on the first AI model. Specifically, the terminal device may measure a downlink reference signal at each of a plurality of moments, to obtain channel state information (namely, channel state information at a plurality of historical moments) respectively corresponding to the plurality of moments. Then, the terminal device predicts channel state information (namely, second channel state information or the inference result) at a target moment based on the channel state information at the plurality of the historical moments and the first AI model. The plurality of historical moments are before the target moment. Further, the terminal device may further measure the downlink reference signal at the target moment, to obtain the channel state information (namely, the first channel state information or the actual result) at the target moment. Then, the terminal device determines the value of the performance indicator based on the first channel state information and the second channel state information at the target moment.

In a specific implementation, one slot may include N moments. The terminal device may measure the downlink reference signal at each of N moments included in each of M slots, to obtain channel state information (namely, channel state information at M×N historical moments) respectively corresponding to M×N moments. Then, the terminal device predicts second channel state information (namely, an inference result) at N target moments in a target slot based on the channel state information at the M×N historical moments and the first AI model. Similarly, the terminal device may measure the downlink reference signal at each of the N target moments in the target slot, to obtain first channel state information at the N target moments. M and N are positive integers.

For example, the performance indicator is the SGCS, and the trigger condition corresponding to the SGCS includes that the value of the SGCS is less than the SGCS threshold. The terminal device determines the SGCS based on the second channel state information at the N target moments and the first channel state information at the N target moments. For example, the terminal device determines the SGCS based on a relational expression 1. The relational expression 1 is as follows:

$$
\mathrm{SGCS} = \mathrm{E}\left\{ \frac{1}{\mathrm{N}} \sum_{i=1}^{\mathrm{N}} \sum_{j}^{\mathrm{K}} \frac{\lambda_i^j}{\sum_{k=1}^{\mathrm{K}} \lambda_i^k} \left( \frac{\|\widetilde{w}_i^{j\,\mathrm{H}} w_i^j\|}{\|\widetilde{w}_i^j\| \, \|w_i^j\|} \right)^2 \right\}
$$

Herein, $w_i^j$ is a $j^{\mathrm{th}}$ feature vector in first channel state information at an $i^{\mathrm{th}}$ moment, K is a rank, and $\widetilde{w}_i^j$ is a $j^{\mathrm{th}}$ feature vector in second channel state information at the $i^{\mathrm{th}}$ moment. N represents a total quantity of moments (or a total quantity of resource units), i is an integer in [1, N], $E\{\cdot\}$ represents an operation of averaging a plurality of samples, and $\lambda_i^j$ is a feature value of a channel covariance matrix corresponding to $w_i^j$. Herein, i, j, and N are all positive integers.

For example, if the terminal device determines that the value of the SGCS is less than the SGCS threshold, the terminal device determines that the trigger event K1 occurs. If the terminal device determines that the value of the SGCS is greater than or equal to the SGCS threshold, the terminal device determines that the trigger event K1 does not occur.

Optionally, the trigger condition corresponding to the SGCS further includes that the value of the SGCS is less than preset duration corresponding to the SGCS threshold. Correspondingly, if the terminal device determines that duration in which the value of the SGCS is less than the SGCS threshold reaches the preset duration, the terminal device may determine that the trigger event K1 occurs; or if the terminal device determines that duration in which the value of the SGCS is less than the SGCS threshold does not reach the preset duration, the terminal device determines that the trigger event K1 does not occur.

In addition, the trigger condition corresponding to the SGCS further includes the preset hysteresis condition, and the preset hysteresis condition may specifically include a hysteresis value. For example, the trigger condition is set to Ms+Hys<Thresh. Herein, Ms represents the value of the SGCS, Hys represents the hysteresis value, and thresh represents the SGCS threshold. For example, the SGCS threshold is configured as 0.85, and the hysteresis value is 0.05. If current inference performance is good, and the value of the SGCS computed by the terminal device is 0.83, 0.83+0.05<0.85 is a false condition (to be specific, 0.83+0.05=0.88, 0.88 is greater than 0.85, and therefore, the trigger condition is not met). Therefore, the terminal device does not consider that the trigger event K1 occurs. To be specific, although the value of the SGCS is less than the SGCS threshold, a sum of the value of the SGCS and the hysteresis value is greater than the SGCS threshold (that is, the preset hysteresis condition is not met). Therefore, the terminal device does not consider that the trigger event K1 occurs. It is further assumed that the current inference performance deteriorates, the value of the SGCS computed by the terminal device is 0.6, and 0.6+0.05<0.85 is a true condition (that is, the trigger condition is met). Therefore, the terminal device determines that the trigger event K1 occurs. In a possible manner, when the sum of the hysteresis value and the value of the SGCS computed by the terminal device is less than the SGCS threshold and duration reaches the preset duration, the terminal device determines that the trigger event K1 occurs. This helps improve system robustness.

In the channel state information compression scenario:

The first AI model is a two-sided model, the first AI submodel is deployed in the terminal device, the second AI submodel is deployed in the access network device, and the inference result is obtained by the terminal device through inference based on the first AI submodel and obtained by the access network device based on the second AI submodel. Specifically, after the terminal device measures the downlink reference signal at a moment, to obtain channel state information (denoted as first channel state information or an actual result) at the moment, the terminal device may compress the first channel state information based on the first AI submodel to obtain compressed channel state information (namely, a compression result), and then send the compression result to the access network device through an air interface. Correspondingly, after receiving the compression result, the access network device may decompress the compression result based on the second AI submodel, to obtain a decompression result (denoted as second channel state information or an inference result). Further, the terminal device determines the value of the performance indicator based on the first channel state information and the second channel state information.

In a specific implementation, one slot may include N moments. The terminal device may measure the N moments in the slot to obtain N pieces of first channel state information (namely, an actual result), and compress the N pieces of first channel state information to obtain a compression result. Similarly, after receiving the compression result, the access network device may decompress the compression result to obtain N pieces of second channel state information (namely, an inference result).

For example, the performance indicator is the SGCS. For a specific implementation in which the terminal device determines the SGCS based on the first channel state information and the second channel state information, refer to descriptions of the channel state information prediction scenario.

In the beam management enhancement scenario:

The first AI model is a one-sided model, the first AI model is deployed in the terminal device, and the inference result is top k beams (for example, first k beams that are in RSRP rankings and that are obtained through inference) obtained by the terminal device through inference based on the first AI model and after the terminal device scans a small part of beams transmitted by the access network device. The actual result is top k beams determined by the access network device. Further, the performance indicator is the inference accuracy, and a trigger condition corresponding to the inference accuracy is that the inference accuracy is less than the accuracy threshold. The terminal device obtains actual top k beams from the access network device, and determines the inference accuracy based on the actual top k beams and the top k beams obtained by the terminal device through inference.

For example, if the terminal device determines that the inference accuracy is less than the accuracy threshold (that is, the trigger condition corresponding to the inference accuracy is met), the terminal device determines that the trigger event K26 occurs; or if the terminal device determines that the inference accuracy is greater than or equal to the accuracy threshold (that is, the trigger condition corresponding to the inference accuracy is not met), the terminal device determines that the trigger event K26 does not occur.

Optionally, the trigger condition corresponding to the inference accuracy further includes the preset duration and the preset hysteresis condition. For a specific implementation, refer to the descriptions in the channel state information prediction scenario.

In the positioning accuracy enhancement scenario:

The first AI model is a one-sided model, and the first AI model is deployed in the access network device. Further, in AI assisted positioning (AI assisted positioning), the terminal device may obtain the inferred LOS/NLOS identification rate predicted by the access network device based on the first AI model, and use the LOS/NLOS identification rate as the performance indicator. Correspondingly, a trigger condition corresponding to the LOS/NLOS identification rate is that the LOS/NLOS identification rate is less than the identification rate threshold. Further, the terminal device may define a case in which the LOS/NLOS identification rate meets a relational expression 2. The relational expression 2 is as follows:

$$\text{Identification rate } P_r = P_r(\text{LOS} \to \text{LOS}) * R_{\text{LOS}} + P_r(\text{NLOS} \to \text{NLOS}) * R_{\text{NLOS}}$$

The identification rate $P_r$ is the LOS/NLOS identification rate, $P_r(LOS \rightarrow LOS)$ is a probability of identifying LOS path data as an LOS path, $R_{LOS}$ is a percentage of LOS path data in a data set, $P_r(NLOS \rightarrow NLOS)$ is a probability of identifying NLOS path data as an NLOS path, and $R_{NLOS}$ is a percentage of NLOS path data in the data set.

For example, if the terminal device determines that the LOS/NLOS identification rate is less than the identification rate threshold (that is, the trigger condition corresponding to the LOS/NLOS identification rate is met), the terminal device determines that the trigger event K27 occurs; or if the terminal device determines that the LOS/NLOS identification rate is greater than or equal to the identification rate threshold (that is, the trigger condition corresponding to the LOS/NLOS identification rate is not met), the terminal device determines that the trigger event K27 does not occur. Optionally, for a specific implementation in which the trigger condition corresponding to the LOS/NLOS identification rate further includes the preset duration and the preset hysteresis condition, refer to the descriptions in the channel state information prediction scenario.

In AI direct positioning (AI direct positioning), the terminal device may obtain the real coordinates of the terminal device from the LMF or a positioning reference unit (positioning reference unit, PRU), and obtain the inferred coordinates of the terminal device that are predicted by the LMF/terminal device based on the first AI model. The PRU may be understood as another terminal device whose location and state are known to the terminal device. Further, the terminal device may compute a distance (for example, a Euclidean distance) between the real coordinates of the terminal device and the inferred coordinates of the terminal device. A smaller distance indicates that the real coordinates of the terminal device are closer to the inferred coordinates of the terminal device, that is, the inference performance of the first AI model is better.

For example, the performance indicator is the distance between the real coordinates and the inferred coordinates of the terminal device, and a trigger condition corresponding to the distance is that the distance is greater than the distance threshold. If the terminal device determines that the distance is greater than the distance threshold (that is, a trigger condition corresponding to the threshold is met), the terminal device determines that the trigger event K28 occurs; or if the terminal device determines that the distance is less than or equal to the distance threshold (that is, the trigger condition corresponding to the threshold is not met), the terminal device determines that the trigger event K28 does not occur.

Optionally, for a specific implementation in which the trigger condition corresponding to the distance further includes the preset duration and the preset hysteresis condition, refer to the descriptions in the channel state information prediction scenario.

In a possible manner, in a process in which the terminal device monitors the first AI model, if the terminal device determines that the trigger event occurs, the terminal device generates the monitoring report based on the format of the monitoring report, and sends the monitoring report to the access network device. The monitoring report includes the trigger event. Optionally, the monitoring report further includes the non-trigger event. For example, in the process in which the terminal device monitors the first AI model, if the terminal device determines that the trigger event K1 occurs (for example, the SGCS computed by the terminal device is less than the SGCS threshold), the terminal device may send the monitoring report to the access network device. The monitoring report group not only includes that the SGCS is less than the SGCS threshold, but also may include the value of the RSRP monitored by the terminal device.

In a possible manner, the terminal device obtains formats of the plurality of monitoring reports from the monitoring configuration information of the first AI model, selects a format of a target monitoring report from the formats of the plurality of monitoring reports, and generates, based on the format of the target monitoring report, a monitoring report that needs to be reported to the access network device.

In an example, the terminal device selects a format of a target monitoring report from the formats of the plurality of monitoring reports based on the monitored trigger event that has occurred. With reference to the example in step 901, if the terminal device determines that the monitored trigger event that has occurred is K1, the terminal device determines that the format of the target monitoring report is the format 1.

In still another example, the terminal device selects a format of a target monitoring report from the formats of the plurality of monitoring reports based on a currently monitored AI scenario (or a model in the AI scenario). With reference to the example in step 901, the terminal device determines that the currently monitored AI scenario is the channel state information enhancement scenario, or determines that a currently monitored first AI model is a model in the channel state information enhancement scenario, and therefore, determines that the format of the target monitoring report is the format 1.

When the monitoring configuration information of the first AI model further includes the monitoring identifier, and the terminal device monitors the performance indicator of the first AI model corresponding to each monitoring identifier, if the terminal device determines that the value of the performance indicator of the first AI model meets the trigger condition corresponding to the performance indicator, the terminal device may determine, based on the monitoring identifier, to report the format of the monitoring report, and then report the monitoring report. With reference to the example in FIG. 10, when monitoring the performance indicator of the first AI model (namely, the model 1) corresponding to the monitoring identifier 1, if the terminal device determines that the value of the performance indicator of the model 1 meets the trigger condition corresponding to the performance indicator, the terminal device may determine, based on the monitoring identifier 1, that the format of the monitoring report is the format 1, and then report the monitoring report based on the format 1.

Optionally, the trigger event further includes the preset duration, and the terminal device may determine to report the monitoring report when the duration of the trigger event reaches the preset duration. Optionally, the trigger event further includes the preset hysteresis condition, and the terminal device reports the monitoring report when determining that the duration of the trigger event reaches preset duration and the preset hysteresis condition is met.

Optionally, the monitoring report further includes one or more of the monitoring identifier, an identifier of a physical cell in which the terminal device is located, and an identifier of a serving cell in which the terminal device is located.

It should be additionally noted that the monitoring configuration information of the first AI model may further include a report periodicity, and the report periodicity is used to indicate the terminal device to report the monitoring report to the access network device based on a specific report periodicity. It may be understood that the terminal device not only may send the monitoring report to the access network device based on occurrence of the trigger event, but also may periodically obtain, based on the report periodicity, a value of a report indicator required for reporting the monitoring report; and then generate the monitoring report based on the obtained value of the report indicator, and report the monitoring report to the access network device.

Correspondingly, after receiving the monitoring report from the terminal device, the access network device sends a change indication to the terminal device based on the trigger event in the monitoring report. The terminal device changes the first AI model based on the change indication. The following provides examples of a plurality of manners in which the terminal device changes the first AI model.

Example 1: The terminal device switches the first AI model to the second AI model based on the change indication.

For example, both the first AI model and the second AI model are one-sided models and are configured in the terminal device. The access network device sends a switching indication (namely, a specific implementation of the change indication) to the terminal device. Correspondingly, the terminal device switches the running first AI model to the second AI model based on the switching indication.

Alternatively, both the first AI model and the second AI model are two-sided models, and two submodels of the two-sided model are separately configured in the terminal device and the access network device. To be specific, the first AI model includes a first AI submodel and a second AI submodel, the second AI model includes a third AI submodel and a fourth AI submodel, the first AI submodel and the third AI submodel are configured in the terminal device, and the third AI submodel and the fourth AI submodel are configured in the access network device. The access network device sends a switching indication (namely, a specific implementation of the change indication) to the terminal device. Correspondingly, the terminal device switches the running first AI submodel to the third AI submodel based on the switching indication. In addition, the access network device further needs to switch the locally running second AI submodel to the fourth AI submodel.

Example 2: The terminal device updates a parameter and/or structure in the first AI model based on the change indication.

For example, the first AI model is a one-sided model and is configured in the terminal device. The access network device sends an update indication (namely, a specific implementation of the change indication) to the terminal device, and the update indication includes a to-be-updated parameter and/or structure. Correspondingly, the terminal device updates the first AI model based on the to-be-updated parameter and/or structure in the update indication.

Alternatively, the first AI model is a two-sided model and two submodels (namely, the first AI submodel and the second AI submodel) of the two-sided model are respectively configured in the terminal device and the access network device. The access network device sends an update indication (namely, a specific implementation of the change indication) to the terminal device, and the update indication includes a to-be-updated parameter and/or structure. Correspondingly, the terminal device updates the first AI submodel based on the to-be-updated parameter and/or structure in the update indication. In addition, the access network device further updates the locally running second AI submodel.

Further, after deactivating a local model, the terminal device (or the access network device) may further update the local model based on collected data, and then continue to perform inference based on the first AI model when activating the first AI model again based on an indication of the access network device.

Example 3: The terminal device deactivates (deactivates) the first AI model based on the change indication.

For example, the first AI model is a one-sided model and is configured in the terminal device. The access network device sends a deactivation indication (namely, a specific implementation of the change indication) to the terminal device. Correspondingly, the terminal device deactivates the running first AI model based on the deactivation indication.

Alternatively, the first AI model is a two-sided model and two submodels (namely, the first AI submodel and the second AI submodel) of the two-sided model are respectively configured in the terminal device and the access network device. The access network device sends a deactivation indication (namely, a specific implementation of the change indication) to the terminal device. Correspondingly, the terminal device deactivates the running first AI submodel based on the deactivation indication. The access network device further needs to deactivate the locally running second AI submodel.

Example 4: The terminal device makes a communication network fall back (fall back) from an AI mode to a non-AI mode based on the change indication.

For example, the first AI model is a one-sided model and is configured in the terminal device. The access network device sends a fallback indication (namely, a specific implementation of the change indication) to the terminal device. Correspondingly, the terminal device makes the terminal device fall back from the AI mode to the non-AI mode based on the fallback indication.

Alternatively, the first AI model is a two-sided model and two submodels (namely, the first AI submodel and the second AI submodel) of the two-sided model are respectively configured in the terminal device and the access network device. The access network device sends a fallback indication (namely, a specific implementation of the change indication) to the terminal device. Correspondingly, the terminal device makes the terminal device fall back from the AI mode to the non-AI mode based on the fallback indication. In addition, the access network device further needs to make the access network device fall back from the AI mode to the non-AI mode.

Optionally, the access network device may use an RRC reconfiguration message to carry the change indication and send the RRC reconfiguration message to the terminal device. In the RRC reconfiguration message, the access network device may use different identifiers to indicate the switching indication, the update indication, the deactivation indication, and the fallback indication. For example, the RRC reconfiguration message includes 2 bits. When values of the 2 bits are separately 11, 10, 01, and 00, the 2 bits indicate the switching indication, the update indication, the deactivation indication, and the fallback indication.

In addition, a specific implementation in which the access network device changes the first AI model in the communication network may be another manner. For example, the current first AI mode of the communication network is switched to the second AI mode. This is not limited in this application.

Optionally, the access network device may further receive the monitoring report periodically reported by the terminal device, and determine, based on the report indicator and the value of the report indicator in the periodically reported monitoring report, to change a model in the communication network. For a specific change manner, refer to the descriptions in Example 1 to Example 4. This helps the access network device to find in a timely manner a trend in which model performance deteriorates, and make a decision in advance, to help better optimize network performance.

In addition, when the first AI model is a one-sided model, the terminal device may further change the first AI model independently. Specifically, after determining that the trigger event occurs, the terminal device changes the first AI model independently, to obtain a result of changing the first AI model, and then uses the monitoring report to carry the result of changing the first AI model and sends the monitoring report to the access network device. In other words, the monitoring report includes the result of changing the first AI model by the terminal device. This helps the access network device to sense a running state and a state change of the AI model on the terminal device side in a timely manner, to better optimize network performance.

The following provides examples of a plurality of manners in which the terminal device changes the first AI model.

Example a: The terminal device switches the first AI model to the second AI model. Both the first AI model and the second AI model are one-sided models and are configured in the terminal device.

Example b: The terminal device updates the parameter and/or structure in the first AI model.

Example c: The terminal device deactivates the first AI model. Further, after deactivating a local model, the terminal device may further update the local model based on collected data, and then continue to perform inference based on the first AI model when activating the first AI model again.

Example d: The terminal device makes the terminal device fall back from the AI mode to the non-AI mode.

In addition, a specific implementation in which the terminal device changes the first AI model in the terminal device may be another manner. For example the current first AI mode of the terminal device is switched to the second AI mode. This is not limited in this application.

To better explain embodiments of this application, the following provides descriptions by using a channel state information compression scenario and a channel state information prediction scenario.

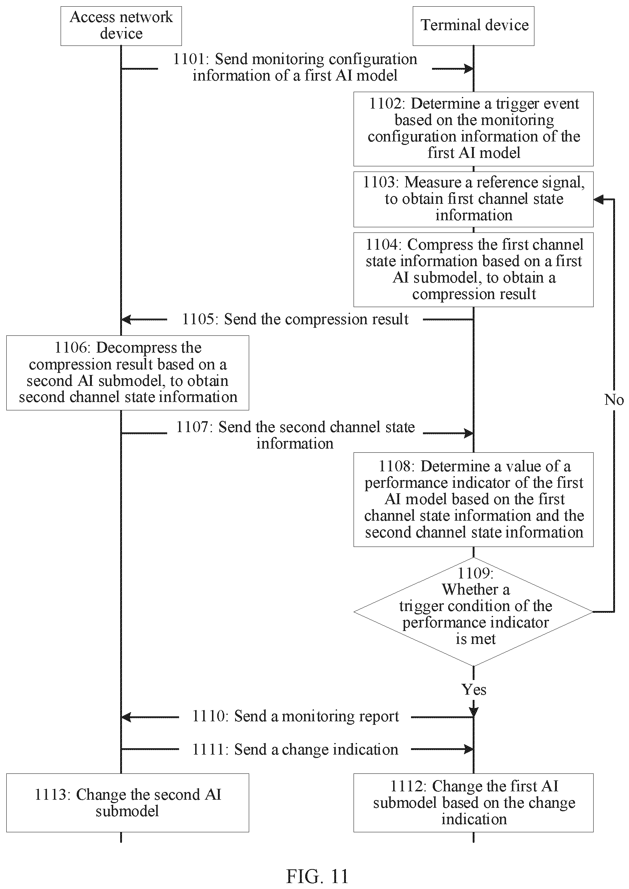

FIG. 11 is a schematic flowchart in which a terminal device monitors inference performance of a first AI model in a channel state information compression scenario according to an example of this application. The first AI model includes a first AI submodel and a second AI submodel, the first AI submodel is deployed in the terminal device, and the second AI submodel is deployed in an access network device.

Step 1101: The access network device sends monitoring configuration information of the first AI model to the terminal device, and correspondingly, the terminal device receives the monitoring configuration information of the first AI model from the access network device. For a specific implementation, refer to the descriptions in step 901.

Step 1102: The terminal device determines a trigger event based on the monitoring configuration information of the first AI model, where the trigger event may specifically include a performance indicator and a trigger condition corresponding to the performance indicator. For example, the performance indicator is an SGCS. To be specific, the trigger event includes an SGCS and a trigger condition corresponding to the SGCS. For a specific implementation, refer to the descriptions in step 902.

Step 1103: The terminal device measures a reference signal, to obtain first channel state information.

Step 1104: The terminal device compresses the first channel state information based on the first AI submodel, to obtain a compression result. For a specific implementation, refer to the descriptions in the related embodiment in FIG. 6.

Step 1105: The terminal device sends the compression result to the access network device, and correspondingly, the access network device receives the compression result from the terminal device.

Step 1106: The access network device decompresses the compression result based on the second AI submodel, to obtain second channel state information. For a specific implementation, refer to the descriptions in the embodiment related to FIG. 6.

Step 1107: The access network device sends the second channel state information to the terminal device. Correspondingly, the terminal device receives the second channel state information from the access network device.

Step 1108: The terminal device determines a value of the performance indicator of the first AI model based on the first channel state information and the second channel state information. For example, when the performance indicator is the SGCS, the terminal device may determine a value of the SGCS based on the descriptions in the related embodiment of the relational expression 1.

Step 1109: The terminal device determines whether the value of the performance indicator of the first AI model meets the trigger condition of the performance indicator; and performs step 1110 to step 1113 if the value of the performance indicator of the first AI model meets the trigger condition of the performance indicator; or performs step 1103 to step 1109 again if the value of the performance indicator of the first AI model does not meet the trigger condition of the performance indicator.

For example, the performance indicator is the SGCS. When determining that the value of the SGCS is less than an SGCS threshold, or that the value of the SGCS is less than an SGCS threshold and duration reaches preset duration, the terminal device determines that the value of the SGCS of the first AI model meets the trigger condition of the SGCS. When determining that the value of the SGCS is greater than the SGCS threshold, or that the value of the SGCS is less than the SGCS threshold and the duration does not reach the preset duration, the terminal device determines that the value of the SGCS of the first AI model does not meet the trigger condition of the SGCS.

Step 1110: The terminal device sends a monitoring report to the access network device, and correspondingly, the access network device receives the monitoring report from the terminal device. The monitoring report includes the value of the SGCS.

Step 1111: The access network device sends a change indication to the terminal device based on the monitoring report.

Step 1112: The terminal device changes the first AI submodel based on the change indication.

Step 1113: The access network device changes the second AI submodel. Step 1113 may be performed before step 1111 or step 1112.

For content that is not described in detail in step 1103 to step 1112, refer to the descriptions in step 903.

It may be understood that step 1101 and step 1102 are a preconfiguration process, and step 1103 to step 1113 are a monitoring process. It may be understood that after one preconfiguration process, there may be a plurality of monitoring processes.

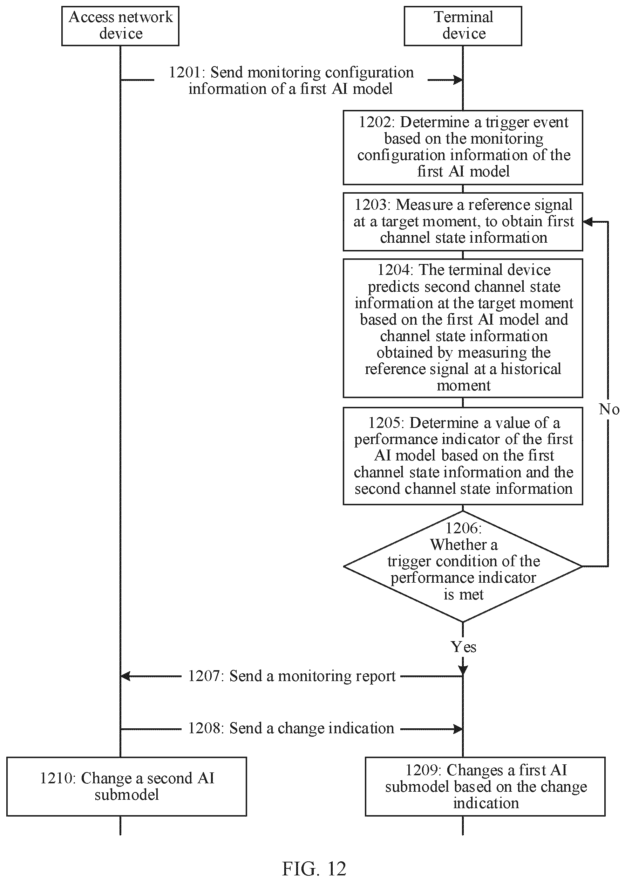

FIG. 12 is a schematic flowchart in which a terminal device monitors inference performance of a first AI model in a channel state information prediction scenario according to an example of this application. The first AI model is deployed in the terminal device, and the first AI model is used for channel state information prediction.

Step 1201: The access network device sends monitoring configuration information of the first AI model to the terminal device, and correspondingly, the terminal device receives the monitoring configuration information of the first AI model from the access network device. For a specific implementation, refer to the descriptions in step 901.

Step 1202: The terminal device determines a trigger event based on the monitoring configuration information of the first AI model, where the trigger event may specifically include a performance indicator and a trigger condition corresponding to the performance indicator. For example, the performance indicator is an SGCS. To be specific, the trigger event includes an SGCS and a trigger condition corresponding to the SGCS. For a specific implementation, refer to the descriptions in step 902.

Step 1203: The terminal device measures a reference signal at a target moment, to obtain first channel state information.

Step 1204: The terminal device predicts second channel state information at the target moment based on the first AI model and channel state information obtained by measuring the reference signal at a historical moment, where the historical moment is before the target moment.

Step 1205: The terminal device determines a value of the performance indicator of the first AI model based on the first channel state information and the second channel state information. For example, when the performance indicator is the SGCS, the terminal device may determine a value of the SGCS based on the descriptions in the related embodiment of the relational expression 1.

Step 1206: The terminal device determines whether the value of the performance indicator of the first AI model meets the trigger condition of the performance indicator; and performs step 1207 to step 1210 if the value of the performance indicator of the first AI model meets the trigger condition of the performance indicator; or performs step 1203 to step 1206 again if the value of the performance indicator of the first AI model does not meet the trigger condition of the performance indicator.

For example, the performance indicator is the SGCS. When determining that the value of the SGCS is less than an SGCS threshold, or that the value of the SGCS is less than an SGCS threshold and duration reaches preset duration, the terminal device determines that the value of the SGCS of the first AI model meets the trigger condition of the SGCS. When determining that the value of the SGCS is greater than the SGCS threshold, or that the value of the SGCS is less than the SGCS threshold and the duration does not reach the preset duration, the terminal device determines that the value of the SGCS of the first AI model does not meet the trigger condition of the SGCS.

Step 1207: The terminal device sends a monitoring report to the access network device, and correspondingly, the access network device receives the monitoring report from the terminal device. The monitoring report includes the value of the SGCS.

Step 1208: The access network device sends a change indication to the terminal device based on the monitoring report.

Step 1209: The terminal device changes the first AI submodel based on the change indication.

Step 1210: The access network device changes the second AI submodel. Step 1210 may be performed before step 1208 or step 1209.

For content that is not described in detail in step 1203 to step 1210, refer to the descriptions in step 903.

It may be understood that step 1201 and step 1202 are a preconfiguration process, and step 1203 to step 1210 are a monitoring process. It may be understood that after one preconfiguration process, there may be a plurality of monitoring processes.

In this application, terms, nouns, technical solutions, and the like in embodiments related to the figures may be mutually cited and referenced.

In the foregoing technical solution, the terminal device monitors the inference performance of the first AI model based on the monitoring configuration information, and sends, to the access network device when determining that the trigger event occurs, the monitoring report indicating the inference performance of the first AI model. In this way, the terminal device can find in a timely manner that the inference performance of the first AI model deteriorates, and take a corresponding measure for the first AI model, to ensure overall network performance.

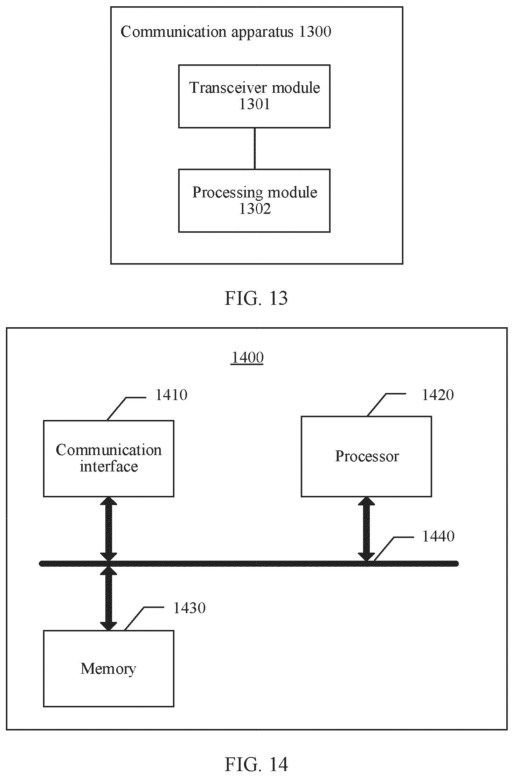

Based on the foregoing content and a same concept, FIG. 13 and FIG. 14 are diagrams of possible structures of communication apparatuses according to this application. The communication apparatuses may be configured to implement the functions of the terminal device or the access network device in the method embodiments. Therefore, beneficial effects of the method embodiments can also be implemented. For example, the communication apparatus may be the terminal device in FIG. 1 to FIG. 4b, or the communication apparatus may be the access network device in FIG. 1 to FIG. 4b. The following describes only main steps of implementing the communication apparatus. For other implementation details, refer to the foregoing embodiments. Details are not described herein again.

As shown in FIG. 13, a communication apparatus 1300 includes a transceiver module 1301 and a processing module 1302.

When the communication apparatus 1300 is a terminal device:

The transceiver module 1301 is configured to receive monitoring configuration information of a first AI model from an access network device. The monitoring configuration information is used to monitor inference performance of the first AI model. The processing module 1302 is configured to: determine a trigger event based on the monitoring configuration information; and when determining that the trigger event occurs, control the transceiver module 1301 to send a monitoring report to the access network device. The monitoring report indicates the inference performance of the first AI model.

In a possible implementation, the trigger event includes a performance indicator and a trigger condition corresponding to the performance indicator; and when determining that the trigger event occurs, the processing module 1302 is specifically configured to: determine a value of the performance indicator of the first AI model; and determine that the value of the performance indicator of the first AI model meets the trigger condition.

In a possible implementation, the first AI model is deployed in the terminal device; and when determining the value of the performance indicator of the first AI model, the processing module 1302 is specifically configured to: measure a reference signal at a target moment, to obtain first channel state information; predict second channel state information at the target moment based on the first AI model and channel state information obtained by measuring the reference signal at a historical moment, where the historical moment is before the target moment; and determine the value of the performance indicator of the first AI model based on the first channel state information and the second channel state information.

In a possible implementation, the first AI model includes a first AI submodel and a second AI submodel, the first AI submodel is deployed in the terminal device, and the second AI submodel is deployed in the access network device; and

when determining the value of the performance indicator of the first AI model, the processing module 1302 is specifically configured to: measure a reference signal, to obtain first channel state information; compress the first channel state information based on the first AI submodel, to obtain a compression result, and send the compression result to the access network device; control the transceiver module 1301 to receive second channel state information from the access network device, where the second channel state information is obtained by the access network device by decompressing the compression result based on the second AI submodel; and determine the value of the performance indicator of the first AI model based on the first channel state information and the second channel state information.

In a possible implementation, the monitoring configuration information includes a plurality of trigger condition templates, the monitoring configuration information further includes the performance indicator, a threshold, and a template identifier that correspond to the trigger event, and when determining the trigger event based on the monitoring configuration information, the processing module 1302 is specifically configured to: determine a target trigger condition template from the plurality of trigger condition templates based on the template identifier; and determine the trigger event based on the target trigger condition template, and the performance indicator and the threshold that correspond to the trigger event.

In a possible implementation, the monitoring report includes the trigger event, and the trigger event is used by the access network device to determine a change indication; and the processing module 1302 is further configured to: control the transceiver module 1301 to receive the change indication from the access network device; and change the first AI model based on the change indication.

In a possible implementation, the monitoring report includes a result of changing the first AI model; and before the transceiver module 1301 sends the monitoring report to the access network device, the processing module 1302 is further configured to: change the first AI model based on the trigger event, to obtain the result of changing the first AI model.

In a possible implementation, when changing the first AI model, the processing module 1302 is specifically configured to perform one or more of the following: switching the first AI model to a second AI model; updating a parameter and/or structure in the first AI model; deactivating the first AI model; and making a communication network fall back from an AI mode to a non-AI mode.

When the communication apparatus 1300 is an access network device:

The processing module 1302 is configured to control the transceiver module 1301 to send monitoring configuration information of a first AI model to a terminal device. The monitoring configuration information is used to monitor inference performance of the first AI model, and the monitoring configuration information indicates a trigger event. The processing module 1302 is further configured to control the transceiver module 1301 to receive a monitoring report from the terminal device. The monitoring report indicates inference performance that is of the first AI model and that exists when the trigger event occurs.

In a possible implementation, the trigger event includes a performance indicator and a trigger condition corresponding to the performance indicator, and that the trigger event occurs includes that a value of the performance indicator of the first AI model meets the trigger condition.

In a possible implementation, the monitoring configuration information includes a plurality of trigger condition templates, and the monitoring configuration information further includes the performance indicator, a threshold, and a template identifier that correspond to the trigger event. The template identifier indicates a target trigger condition template in the plurality of trigger condition templates. The target trigger condition template, and the performance indicator and the threshold that correspond to the trigger event are used to determine the trigger event.

In a possible implementation, the monitoring report includes the trigger event, and the processing module 1302 is further configured to control, based on the trigger event, the transceiver module 1301 to send a change indication to the terminal device. The change indication is used to change the first AI model.

In a possible implementation, the monitoring report includes a result of changing the first AI model.

In a possible implementation, changing the first AI model includes one or more of the following: switching the first AI model to a second AI model; updating a parameter and/or structure in the first AI model; deactivating the first AI model; and making a communication network fall back from an AI mode to a non-AI mode.

Division into the modules in embodiments of this application is an example, is merely division into logical functions, and may be other division in an actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 14 shows an apparatus 1400 according to an embodiment of this application. The apparatus shown in FIG. 14 may be an implementation of a hardware circuit of the apparatus shown in FIG. 13. The apparatus is applicable to the foregoing flowcharts, and performs a function of the terminal device or the access network device in the method embodiments.

For ease of description, FIG. 14 shows only main components of the apparatus.

The apparatus 1400 shown in FIG. 14 includes a communication interface 1410, a processor 1420, and a memory 1430. The memory 1430 is configured to store program instructions and/or data. The processor 1420 may cooperate with the memory 1430. The processor 1420 may execute the program instructions stored in the memory 1430. When the instructions or the program stored in the memory 1430 is executed, the processor 1420 is configured to perform an operation performed by the processing module 1302 in the foregoing embodiment, and the communication interface 1410 is configured to perform an operation performed by the transceiver module 1301 in the foregoing embodiment.

The memory 1430 is coupled to the processor 1420. The coupling in this embodiment of this application may be an indirect coupling or a communication connection between apparatuses, units, or modules in an electrical form, a mechanical form, or another form, and is used for information exchange between the apparatuses, the units, or the modules. At least one of the memories 1430 may be included in the processor 1420.

In this embodiment of this application, the communication interface may be a transceiver, a circuit, a bus, a module, or a communication interface of another type. In this embodiment of this application, when the communication interface is a transceiver, the transceiver may include an independent receiver and an independent transmitter, or may be a transceiver or a communication interface integrated with sending and receiving functions.

The apparatus 1400 may further include a communication line 1440. The communication interface 1410, the processor 1420, and the memory 1430 may be interconnected through a communication line 1440. The communication line 1440 may be a peripheral component interconnect (peripheral component interconnect, PCI for short) bus, an extended industry standard architecture (extended industry standard architecture, EISA for short) bus, or the like. The communication line 1440 may be classified into an address bus, a data bus, a control bus, and the like. For ease of representation, only one bold line is used for indication in FIG. 14, but it does not indicate that there is only one bus or only one type of bus.

Based on the foregoing content and a same concept, an embodiment of this application provides a computer-readable storage medium. The computer-readable storage medium stores a computer program or instructions. When the computer program or the instructions are executed, a computer is enabled to perform the method in any possible implementation of the method embodiments.

Based on the foregoing content and a same concept, an embodiment of this application provides a computer program product. When a computer reads and executes the computer program product, the computer is enabled to perform the method in any possible implementation of the method embodiments.

Based on the foregoing content and a same concept, an embodiment of this application provides a chip system, including a processor. The processor is coupled to a memory, the memory is configured to store a program or instructions, and when the program or the instructions are executed by the processor, the chip system is enabled to implement the method in the method embodiments.

Optionally, the chip system further includes an interface circuit, and the interface circuit is configured to exchange code instructions with the processor.

Optionally, there may be one or more processors in the chip system, and the processor may be implemented by hardware or software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be separately disposed on different chips.

It may be understood that "greater than" in this application may be "greater than or equal to" in some cases, and "less than" may be "less than or equal to" in some cases. For ease of description, "greater than" and "less than" are used as examples for description in this application. In this application, "greater than" may also be referred to as "higher than" or "higher than or equal to" in some cases, and "less than" in this application may also be referred to as "lower than" or "lower than or equal to" in some cases.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the protection scope of this application. Therefore, this application is intended to cover these modifications and variations of this application provided that they fall within the scope defined by the following claims and their equivalent technologies.

**Claims**

1. A communication method, comprising:

   receiving, by a terminal device, monitoring configuration information of a first artificial intelligence AI model from an access network device, wherein the monitoring configuration information is used to monitor inference performance of the first AI model;
   determining, by the terminal device, a trigger event based on the monitoring configuration information; and
   sending, by the terminal device, a monitoring report to the access network device when determining that the trigger event occurs, wherein the monitoring report indicates the inference performance of the first AI model.

2. The method according to claim 1, wherein the trigger event comprises a performance indicator and a trigger condition corresponding to the performance indicator, and that the terminal device determines that the trigger event occurs comprises:

   determining, by the terminal device, a value of the performance indicator of the first AI model; and
   determining, by the terminal device, that the value of the performance indicator of the first AI model meets the trigger condition.

3. The method according to claim 2, wherein the first AI model is deployed in the terminal device; and
   determining, by the terminal device, the value of the performance indicator of the first AI model comprises:

   measuring, by the terminal device, a reference signal at a target moment, to obtain first channel state information;
   predicting, by the terminal device, second channel state information at the target moment based on the first AI model and channel state information obtained by measuring the reference signal at a historical moment, wherein the historical moment is before the target moment; and
   determining, by the terminal device, the value of the performance indicator of the first AI model based on the first channel state information and the second channel state information.

4. The method according to claim 2, wherein the first AI model comprises a first AI submodel and a second AI submodel, the first AI submodel is deployed in the terminal device, and the second AI submodel is deployed in the access network device; and
   determining, by the terminal device, the value of the performance indicator of the first AI model comprises:

   measuring, by the terminal device, a reference signal, to obtain first channel state information;
   compressing, by the terminal device, the first channel state information based on the first AI submodel, to obtain a compression result, and sending the compression result to the access network device;
   receiving, by the terminal device, second channel state information from the access network device, wherein the second channel state information is obtained by the access network device by decompressing the compression result based on the second AI submodel; and
   determining, by the terminal device, the value of the performance indicator of the first AI model based on the first channel state information and the second channel state information.

5. The method according to any one of claims 2 to 4, wherein the monitoring configuration information comprises a plurality of trigger condition templates, and the monitoring configuration information further comprises the performance indicator, a threshold, and a template identifier that correspond to the trigger event; and
   determining, by the terminal device, the trigger event based on the monitoring configuration information comprises:

   determining, by the terminal device, a target trigger condition template from the plurality of trigger condition templates based on the template identifier; and
   determining, by the terminal device, the trigger event based on the target trigger condition template, and the performance indicator and the threshold that correspond to the trigger event.

6. The method according to any one of claims 1 to 5, wherein the monitoring report comprises the trigger event, and the trigger event is used by the access network device to determine a change indication; and
   the method further comprises:

   receiving, by the terminal device, the change indication from the access network device; and

changing, by the terminal device, the first AI model based on the change indication.

7. The method according to any one of claims 1 to 5, wherein the monitoring report comprises a result of changing the first AI model; and

before sending, by the terminal device, the monitoring report to the access network device, the method further comprises:
changing, by the terminal device, the first AI model based on the trigger event, to obtain the result of changing the first AI model.

8. The method according to claim 6 or 7, wherein changing the first AI model comprises one or more of the following:

switching the first AI model to a second AI model;
updating a parameter and/or structure in the first AI model;
deactivating the first AI model; and
making a communication network fall back from an AI mode to a non-AI mode.

9. A communication method, comprising:

sending, by an access network device, monitoring configuration information of a first artificial intelligence AI model to a terminal device, wherein the monitoring configuration information is used to monitor inference performance of the first AI model, and the monitoring configuration information indicates a trigger event; and
receiving, by the access network device, a monitoring report from the terminal device, wherein the monitoring report indicates inference performance that is of the first AI model and that exists when the trigger event occurs.

10. The method according to claim 9, wherein the trigger event comprises a performance indicator and a trigger condition corresponding to the performance indicator; and
that the trigger event occurs comprises that a value of the performance indicator of the first AI model meets the trigger condition.

11. The method according to claim 10, wherein the monitoring configuration information comprises a plurality of trigger condition templates, and the monitoring configuration information further comprises the performance indicator, a threshold, and a template identifier that correspond to the trigger event;

the template identifier indicates a target trigger condition template in the plurality of trigger condition templates; and
the target trigger condition template, and the performance indicator and the threshold that correspond to the trigger event are used to determine the trigger event.

12. The method according to any one of claims 9 to 11, wherein the monitoring report comprises the trigger event, and the method further comprises:
sending, by the access network device, a change indication to the terminal device based on the trigger event, wherein the change indication is used to change the first AI model.

13. The method according to any one of claims 9 to 11, wherein the monitoring report comprises a result of changing the first AI model.

14. The method according to claim 12 or 13, wherein changing the first AI model comprises one or more of the following:

switching the first AI model to a second AI model;
updating a parameter and/or structure in the first AI model;
deactivating the first AI model; and
making a communication network fall back from an AI mode to a non-AI mode.

15. A communication apparatus, comprising:

a transceiver module, configured to receive monitoring configuration information of a first artificial intelligence AI model from an access network device, wherein the monitoring configuration information is used to monitor inference performance of the first AI model; and

a processing module, configured to: determine a trigger event based on the monitoring configuration information; and when determining that the trigger event occurs, control the transceiver module to send a monitoring report to the access network device, wherein the monitoring report indicates the inference performance of the first AI model.

16. The apparatus according to claim 15, wherein the trigger event comprises a performance indicator and a trigger condition corresponding to the performance indicator; and when determining that the trigger event occurs, the processing module is specifically configured to:

determine a value of the performance indicator of the first AI model; and
determine that the value of the performance indicator of the first AI model meets the trigger condition.

17. The apparatus according to claim 16, wherein the first AI model is deployed in a terminal device; and when determining the value of the performance indicator of the first AI model, the processing module is specifically configured to:

measure a reference signal at a target moment, to obtain first channel state information;
predict second channel state information at the target moment based on the first AI model and channel state information obtained by measuring the reference signal at a historical moment, wherein the historical moment is before the target moment; and
determine the value of the performance indicator of the first AI model based on the first channel state information and the second channel state information.

18. The apparatus according to claim 16, wherein the first AI model comprises a first AI submodel and a second AI submodel, the first AI submodel is deployed in the terminal device, and the second AI submodel is deployed in the access network device; and when determining the value of the performance indicator of the first AI model, the processing module is specifically configured to:

measure a reference signal, to obtain first channel state information;
compress the first channel state information based on the first AI submodel, to obtain a compression result, and send the compression result to the access network device;
control the transceiver module to receive second channel state information from the access network device, wherein the second channel state information is obtained by the access network device by decompressing the compression result based on the second AI submodel; and
determine the value of the performance indicator of the first AI model based on the first channel state information and the second channel state information.

19. The apparatus according to any one of claims 16 to 18, wherein the monitoring configuration information comprises a plurality of trigger condition templates, the monitoring configuration information further comprises the performance indicator, a threshold, and a template identifier that correspond to the trigger event, and when determining the trigger event based on the monitoring configuration information, the processing module is specifically configured to:

determine a target trigger condition template from the plurality of trigger condition templates based on the template identifier; and
determine the trigger event based on the target trigger condition template, and the performance indicator and the threshold that correspond to the trigger event.

20. The apparatus according to any one of claims 15 to 19, wherein the monitoring report comprises the trigger event, and the trigger event is used by the access network device to determine a change indication; and the processing module is further configured to:

control the transceiver module to receive the change indication from the access network device; and
change the first AI model based on the change indication.

21. The apparatus according to any one of claims 15 to 19, wherein the monitoring report comprises a result of changing the first AI model; and before the transceiver module sends the monitoring report to the access network device, the processing module is further configured to:
change the first AI model based on the trigger event, to obtain the result of changing the first AI model.

22. The apparatus according to claim 20 or 21, wherein when changing the first AI model, the processing module is specifically configured to perform one or more of the following:

switching the first AI model to a second AI model;
updating a parameter and/or structure in the first AI model;
deactivating the first AI model; and
making a communication network fall back from an AI mode to a non-AI mode.

23. A communication apparatus, comprising:

a processing module, configured to control a transceiver module to send monitoring configuration information of a first artificial intelligence AI model to a terminal device, wherein the monitoring configuration information is used to monitor inference performance of the first AI model, and the monitoring configuration information indicates a trigger event, wherein
the processing module is further configured to control the transceiver module to receive a monitoring report from the terminal device, wherein the monitoring report indicates inference performance that is of the first AI model and that exists when the trigger event occurs.

24. The apparatus according to claim 23, wherein the trigger event comprises a performance indicator and a trigger condition corresponding to the performance indicator; and
that the trigger event occurs comprises that a value of the performance indicator of the first AI model meets the trigger condition.

25. The apparatus according to claim 24, wherein the monitoring configuration information comprises a plurality of trigger condition templates, and the monitoring configuration information further comprises the performance indicator, a threshold, and a template identifier that correspond to the trigger event;

the template identifier indicates a target trigger condition template in the plurality of trigger condition templates; and
the target trigger condition template, and the performance indicator and the threshold that correspond to the trigger event are used to determine the trigger event.

26. The apparatus according to any one of claims 23 to 25, wherein the monitoring report comprises the trigger event, and the processing module is further configured to control, based on the trigger event, the transceiver module to send a change indication to the terminal device, wherein the change indication is used to change the first AI model.

27. The apparatus according to any one of claims 23 to 25, wherein the monitoring report comprises a result of changing the first AI model.

28. The apparatus according to claim 26 or 27, wherein changing the first AI model comprises one or more of the following:

switching the first AI model to a second AI model;
updating a parameter and/or structure in the first AI model;
deactivating the first AI model; and
making a communication network fall back from an AI mode to a non-AI mode.

29. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 8 by using a logic circuit or executing code instructions, or the processor is configured to implement the method according to any one of claims 9 to 14 by using a logic circuit or executing code instructions.

30. A computer-readable storage medium, wherein the computer-readable storage medium stores a computer program or instructions, and when the computer program or the instructions are executed by a communication apparatus, the method according to any one of claims 1 to 8 is implemented, or the method according to any one of claims 9 to 14 is implemented.

31. A computer program product, wherein the computer program product comprises a computer program or instructions, and when the computer program or the instructions are executed by a communication apparatus, the method according to any one of claims 1 to 8 is implemented, or the method according to any one of claims 9 to 14 is implemented.

1000

200 Core network

300 Internet

100

110a

110b

120a

120b

120c

120d

120e

120f

120g

120h

120i

120j

FIG. 1

FIG. 2

FIG. 3

FIG. 4a

FIG. 4b

Performance feedback

Model training node

Training data

Model deployment/
updating

Model
feedback

Data source

Inference data

Model inference
node

Output

Actor

FIG. 5

Terminal
device

Access
network device

Actual
channel
state
information

Encoder → Quantizer

Dequantizer → Decoder

Inferred
channel
state
information

**Channel state information
compression model**

FIG. 6

Channel state
information from a
t–k moment to a t
moment

**Channel state
information prediction
model**

(Inferred) channel
state information at
a t+1 moment

FIG. 7

FIG. 8

```
┌─────────────────┐                              ┌─────────────────┐
│ Access network  │                              │ Terminal device │
│     device      │                              │                 │
└─────────────────┘                              └─────────────────┘
         │                                                 │
         │  901: Send monitoring configuration             │
         │  ───── information of a first AI model ────────▶ │
         │                                                 │
         │                                       ┌─────────────────────┐
         │                                       │ 902: Determine a     │
         │                                       │ trigger event        │
         │                                       │ based on the         │
         │                                       │ monitoring           │
         │                                       │ configuration        │
         │                                       │ information of       │
         │                                       │ the first AI model   │
         │                                       └─────────────────────┘
         │                                                 │
         │    903: Send a monitoring report when           │
         │ ◀── determining that the triggering event occurs │
         │                                                 │
```

FIG. 9

| Model 1 | Monitoring identifier 1 | Format 1 of a monitoring report |
| Model 2 | Monitoring identifier 2 | Format 2 of a monitoring report |
| Model 3 | Monitoring identifier 3 | Format 3 of a monitoring report |

FIG. 10

Access network
device

Terminal device

1101: Send monitoring configuration
information of a first AI model

1102: Determine a trigger event
based on the monitoring
configuration information of the
first AI model

1103: Measure a reference signal,
to obtain first channel state
information

1104: Compress the first channel
state information based on a first
AI submodel, to obtain a
compression result

1105: Send the compression result

1106: Decompress the
compression result based on a
second AI submodel, to obtain
second channel state information

No

1107: Send the second channel state
information

1108: Determine a value of a
performance indicator of the first
AI model based on the first
channel state information and the
second channel state information

1109:
Whether a
trigger condition of the
performance indicator
is met

Yes

1110: Send a monitoring report

1111: Send a change indication

1113: Change the second AI
submodel

1112: Change the first AI
submodel based on the change
indication

FIG. 11

```
┌──────────────────┐                                        ┌──────────────┐
│  Access network  │                                        │   Terminal   │
│      device      │                                        │    device    │
└──────────────────┘                                        └──────────────┘
        │          1201: Send monitoring configuration             │
        ├─────────      information of a first AI model      ──────►│
        │                                                           │
        │                         ┌─────────────────────────────────────┐
        │                         │ 1202: Determine a trigger event     │
        │                         │       based on the monitoring       │
        │                         │ configuration information of the    │
        │                         │          first AI model             │
        │                         └─────────────────────────────────────┘
        │                         ┌─────────────────────────────────────┐
        │                         │ 1203: Measure a reference signal    │◄──┐
        │                         │ at a target moment, to obtain first │   │
        │                         │      channel state information      │   │
        │                         └─────────────────────────────────────┘   │
        │                         ┌─────────────────────────────────────┐   │
        │                         │    1204: The terminal device        │   │
        │                         │   predicts second channel state     │   │
        │                         │ information at the target moment    │   │
        │                         │  based on the first AI model and    │   │
        │                         │     channel state information       │   │
        │                         │      obtained by measuring the      │   │
        │                         │   reference signal at a historical  │   │
        │                         │              moment                 │   │
        │                         └─────────────────────────────────────┘   │
        │                         ┌─────────────────────────────────────┐   │
        │                         │   1205: Determine a value of a      │   No
        │                         │ performance indicator of the first  │   │
        │                         │    AI model based on the first      │   │
        │                         │ channel state information and the   │   │
        │                         │  second channel state information   │   │
        │                         └─────────────────────────────────────┘   │
        │                                         ◇ 1206:                    │
        │                                   Whether a                        │
        │                              trigger condition of the ─────────────┘
        │                              performance indicator
        │                                      is met
        │                                        │
        │                                       Yes
        │                                        │
        │◄──────── 1207: Send a monitoring report ──────────────────┤
        │                                                           │
        ├──────── 1208: Send a change indication ──────────────────►│
        │                                                           │
┌──────────────────────┐                          ┌─────────────────────────┐
│ 1210: Change a second│                          │ 1209: Changes a first AI│
│     AI submodel      │                          │ submodel based on the   │
│                      │                          │    change indication    │
└──────────────────────┘                          └─────────────────────────┘
        │                                                           │
```

FIG. 12

Communication apparatus 1300

Transceiver module
1301

Processing module
1302

FIG. 13

1400

1410

Communication
interface

1420

Processor

1440

1430

Memory

FIG. 14

## INTERNATIONAL SEARCH REPORT

| | International application No. |
|---|---|
| | **PCT/CN2024/073091** |

| A. | CLASSIFICATION OF SUBJECT MATTER |
|---|---|

H04W 24/10(2009.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, CNKI, ENTXT, ENTXTC, 3GPP: 测量, 触发, 监测, 监控, 监视, 精度, 人工智能, 神经网络, 事件, 性能, 学习模型, accuracy, AI, machine learning, event, performance, trigger+, measur+, neural network, monitor+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2021263826 A1 (ADVANCED RISC MACH LTD.) 26 August 2021 (2021-08-26) description, paragraphs 0027-0061 | 1-31 |
| A | CN 113065662 A (ALIBABA GROUP HOLDING LIMITED) 02 July 2021 (2021-07-02) entire document | 1-31 |
| A | CN 114071484 A (HUAWEI TECHNOLOGIES CO., LTD.) 18 February 2022 (2022-02-18) entire document | 1-31 |
| A | US 10846201 B1 (AMAZON TECHNOLOGIES, INC.) 24 November 2020 (2020-11-24) entire document | 1-31 |
| A | US 2019213775 A1 (NVIDIA CORP.) 11 July 2019 (2019-07-11) entire document | 1-31 |
| A | US 2019235940 A1 (ADVANCED MICRO DEVICES INC.) 01 August 2019 (2019-08-01) entire document | 1-31 |
| A | US 2023040284 A1 (NOKIA TECHNOLOGIES OY) 09 February 2023 (2023-02-09) entire document | 1-31 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 February 2024** | **22 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/073091** |

| Patent document cited in search report | | | Publication date (day/month/year) | Patent family member(s) | | | Publication date (day/month/year) |
| --- | --- | --- | --- | --- | --- | --- | --- |
| US | 2021263826 | A1 | 26 August 2021 | US | 11663107 | B2 | 30 May 2023 |
| CN | 113065662 | A | 02 July 2021 | None | | | |
| CN | 114071484 | A | 18 February 2022 | WO | 2022022334 | A1 | 03 February 2022 |
| | | | | EP | 4181556 | A1 | 17 May 2023 |
| | | | | US | 2023179490 | A1 | 08 June 2023 |
| US | 10846201 | B1 | 24 November 2020 | None | | | |
| US | 2019213775 | A1 | 11 July 2019 | US | 2023007920 | A1 | 12 January 2023 |
| | | | | US | 10909738 | B2 | 02 February 2021 |
| | | | | US | 2021174569 | A1 | 10 June 2021 |
| | | | | US | 11481950 | B2 | 25 October 2022 |
| US | 2019235940 | A1 | 01 August 2019 | US | 2022229712 | A1 | 21 July 2022 |
| | | | | US | 11748186 | B2 | 05 September 2023 |
| | | | | US | 11294747 | B2 | 05 April 2022 |
| US | 2023040284 | A1 | 09 February 2023 | WO | 2023006188 | A1 | 02 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310165301